(19) **Europäisches Patentamt / European Patent Office / Office européen des brevets**

(11) **EP 2 469 464 A1**

(12) # EUROPEAN PATENT APPLICATION
published in accordance with Art. 153(4) EPC

(43) Date of publication:
**27.06.2012 Bulletin 2012/26**

(21) Application number: **10809949.0**

(22) Date of filing: **16.08.2010**

(51) Int Cl.:
**G06Q 50/00** (2012.01)  **H04W 16/24** (2009.01)

(86) International application number:
**PCT/JP2010/063833**

(87) International publication number:
**WO 2011/021608 (24.02.2011 Gazette 2011/08)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **18.08.2009 JP 2009189369**
**17.09.2009 JP 2009215874**

(71) Applicant: **NTT DOCOMO, INC.**
**Chiyoda-ku**
**Tokyo 100-6150 (JP)**

(72) Inventors:
 • **OYABU Yuki**
  **Tokyo 100-6150 (JP)**
 • **SUZUKI Toshihiro**
  **Tokyo 100-6150 (JP)**
 • **OKAJIMA Ichiro**
  **Tokyo 100-6150 (JP)**
 • **NAGATA Tomohiro**
  **Tokyo 100-6150 (JP)**

(74) Representative: **Viering, Jentschura & Partner**
**Grillparzerstrasse 14**
**81675 München (DE)**

(54) **MANAGEMENT SERVER, COMMUNICATION SYSTEM AND STATISTICAL PROCESSING METHOD**

(57)    Provided is a communication system and a statistical processing method capable of performing statistical processing of user attribute distribution information on a sector-by-sector basis. An acquisition unit (510) acquires, from each of a plurality of mobile equipments (100), a sector ID of a sector where located and a user identifier being, which is identification information of a mobile equipment, and the subscriber location information storage unit (511) stores the acquired sector IDs in associaiton with mobile equipments. Then, the sector level attribute distribution derivation unit (517) agregates the number of mobile equipments for each attribute of mobile equipments on a sector basis indicated by the sector ID based on subscriber information stored in the subscriber attribute information storage unit (512) and location information stored in the subscriber location information storage unit (511). It is therey possible to grasp statistical information for each attribute of mobile equipments on a sector-by-sector basis.

**Fig.6**

EP 2 469 464 A1

## Description

### Technical Field

The present invention relates to a management server that collects location information of a mobile equipment, a communication system, and a statistical processing method.

### Background Art

As a method of collecting location information, as specified in the 3GPP, when a control center of a carrier receives a request for collecting location information of each mobile equipment from an external server, for example, it outputs an instruction to collect location information of each mobile equipment to a switching equipment (for example, MMS (Mobile Multimedia Switching System) / Xgsn (serving/gateway General packet radio service Support Node)) and an RNC (Remote Network Controller) in response to the request, and each node and controller executes processing to collect location information. The processing is specified as MT-LR (Mobile Terminated Location Request) in the 3GPP (3rdGeneration Partnership Project), and disclosed in Non-Patent Literature 1 (3GPP (3RDGeneration Partnership Project) TS23.271), for example.

### Citation List

### Non Patent Literature

NPL1: 3GPP (3RD Generation Partnership Project) TS23.271

### Summary of Invention

### Technical Problem

However, the technique disclosed in Non-Patent Literature 1 does not go beyond collecting location information. It is thus desirable to perform statistical processing of the location information from a variety of angles and generate analyzable information.

In light of the foregoing, an object of the present invention is to provide a management server, a communication system and a statistical processing method capable of performing statistical processing based on the location information.

### Solution to Problem

To solve the above issue, a management server according to the invention includes a subscriber information storage means for storing subscriber information associating identification information indicating a mobile equipment and attribute information indicating an attribute of the mobile equipment, an acquisition means for acquiring a sector ID of a sector where a mobile equipment is located and identification information of the mobile equipment from each of a plurality of mobile equipments, a location information storage means for storing a location information management table associating the sector ID and the identification information of a mobile equipment acquired by the acquisition means, and an aggregation means for aggregating the number of mobile equipments with each attribute of mobile equipments on a sector basis indicated by the sector ID stored in the location information storage means based on the subscriber information stored in the subscriber information storage means.

Further, a statistical processing method according to the invention is a statistical processing method of a management server including a subscriber information storage means for storing subscriber information associating identification information indicating a mobile equipment and attribute information indicating an attribute of the mobile equipment, the method including an acquisition step of acquiring a sector ID of a sector where a mobile equipment is located and identification information of the mobile equipment from each of a plurality of mobile equipments, a location information storage step of storing a location information management table associating the sector ID and the identification information of a mobile equipment acquired in the acquisition step into a location information storage means, and an aggregation step of aggregating the number of mobile equipments with each attribute of mobile equipments on a sector basis indicated by the sector ID stored in the location information storage means based on the subscriber information stored in the subscriber information storage means.

According to the present invention, the sector ID of a sector where a mobile equipment is located is acquired together with identification information of the mobile equipment from each of a plurality of mobile equipments, and the acquired sector IDs and mobile equipments are stored in association. Then, based on the prestored subscriber information, the number of mobile equipments with each attribute of mobile equipments is aggregated on a sector basis indicated by the sector ID. It is therey possible to grasp statistical information for each attribute of mobile equipments on a sector-by-sector basis.

A management server according to the invention preferably includes a plurality of RNCs that perform wireless connection control of a plurality of mobile equipments, a switching equipment that manages the RNCs, and the above-described management server. The RNC includes an RNC acquisition means for, when establishing communication connection with one mobile equipment among the plurality of mobile equipments, acquiring a sector ID of a sector where said one mobile equipment is located, and an RNC transmitting means for transmitting identification information of said one mobile equipment and the sector ID of the sector where located acquired by the acquisition means to the switching equipment when establishing communication connection with said one mobile equipment. The switching equipment includes a receiving means for receiving the sector ID and the identification information of a mobile equipment transmitted from the transmitting means, a storage means for storing the sector ID and the identification information of a mobile equipment received by the receiving means, and a switching equipment transmitting means for transmitting the sector ID stored in the storage means to the management server in response to a request from the management server or at regular intervals. The acquisition means in the management server acquires the sector ID and the identification information of a mobile equipment from the switching equipment.

According to the present invention, the sector ID of a sector where a mobile equipment is located acquired in the RNC is transmitted to the switching equipment when establishing communication connection with the mobile equipment, and the switching equipment outputs identification information of the mobile equipment and the sector ID where the mobile equipment is located to the management server in response to a request from the management server or at regular intervals. It is thereby possible to output the location information of each mobile equipment to the management server with a reduced load on the network.

To solve the above issue, a management server according to the invention includes a sector information storage means for storing a sector identifier indicating a sector formed for each frequency, frequency information indicating one of a first frequency and a second frequency used in the sector, and location information indicating a center position of the sector, a population information storage means for storing a sector identifier indicating a sector formed for each frequency and population information indicating a population in the sector in association with each other, a Voronoi region creation means for creating a Voronoi region of the first frequency and a Voronoi region of the second frequency by performing Voronoi partition based on information stored in the sector information storage means, a partitioned region creation means for creating a partitioned region where the Voronoi region of the first frequency and the Voronoi region of the second frequency created by the Voronoi region creation means overlap, and a population information calculation means for calculating population information of a new partitioned region created by the partitioned region creation means based on an area ratio of the new partitioned region to the Voronoi region of the first frequency, an area ratio of the new partitioned region to the Voronoi region of the second frequency, population information of the Voronoi region of the first frequency calculated from the population information stored in the population information storage means, and population information of the Voronoi region of the second frequency calculated from the population information stored in the population information storage means.

Further, a population information calculation method according to the invention is a population information calculation method of a management server including a sector information storage means for storing a sector identifier indicating a sector formed for each frequency, frequency information indicating one of a first frequency and a second frequency used in the sector, and location information indicating a center position of the sector, and a population information storage means for storing a sector identifier indicating a sector formed for each frequency and population information indicating a population in the sector in association with each other, the method including a Voronoi region creation step of creating a Voronoi region of the first frequency and a Voronoi region of the second frequency by performing Voronoi partition based on information stored in the sector information storage means, a partitioned region creation step of creating a partitioned region where the Voronoi region of the first frequency and the Voronoi region of the second frequency created in the Voronoi region creation step overlap, and a population information calculation step of calculating population information of a new partitioned region created in the partitioned region creation step based on an area ratio of the new partitioned region to the Voronoi region of the first frequency, an area ratio of the new partitioned region to the Voronoi region of the second frequency, population information of the Voronoi region of the first frequency calculated from the population information stored in the population information storage means, and population information of the Voronoi region of the second frequency calculated from the population information stored in the population information storage means.

According to the present invention, a sector identifier indicating a sector, frequency information indicating one of a first frequency and a second frequency used in the sector, and location information indicating a center position of the sector are prestored, and a sector identifier indicating a sector and population information indicating a population in the sector are prestored in association with each other, and a Voronoi region of the first frequency and a Voronoi region of the second frequency are created by performing Voronoi partition based on the prestored sector location information. Then, a new partitioned region where the Voronoi region of the first frequency and the Voronoi region of the second frequency overlap is created. Population information of the created new partitioned region is calculated based on an area ratio of the new partitioned region to the Voronoi region of the first frequency, an area ratio of the new partitioned region to the Voronoi region of the second frequency, population information of the Voronoi region of the first frequency, and population information of the Voronoi region of the second frequency.

It is thereby possible to calculate the population distribution in a given region accurately without non-uniformity. Specifically, when Voronoi regions are created only from the sector center position information or the base station location information without consideration of the frequency band or the overlay state in each sector to be used, an overlap range exists depending on the frequency coverage area, and non-uniformity commonly occurs when calculating the population distribution. However, according to the present invention, a part where Voronoi regions overlap is set as new partitioned regions, and the population information is calculated for each new partitioned region, so that the population distribution non-uniformity is less likely to occur.

Further, a management server according to the invention includes a partition means for partitioning a given region including a new partitioned region created by the partitioned region creation means by a given mesh region, and a population information calculation means for calculating population information of a mesh region partitioned by the partition means based on an area ratio of the new partitioned region included in the mesh region.

Further, a statistical processing method according to the invention includes an acquisition step of acquiring location information and identification information of a mobile equipment from each of a plurality of mobile equipments, a basic table storage step of storing a basic table associating the location information acquired in the acquisition step, acquisition time of the location information, and the identification information of a mobile equipment into a basic table storage means, and a calculation step of calculating population distribution information at given time based on the basic table stored in the basic table storage means.

According to the present invention, a given region including the created new partitioned region is partitioned by a given mesh region, and population information of the partitioned mesh region is calculated based on an area ratio of the new partitioned region included in the mesh region. It is thereby possible to calculate the population distribution of each mesh region.

Further, it is preferred in the management server according to the invention that the sector information storage means further stores frequency information indicating a third frequency and location information indicating a center position of a sector of the third frequency information, the management server further includes an overlay information storage means for storing correspondence indicating an overlay relationship between the second frequency and the third frequency, the Voronoi region creation means creates a Voronoi region based on a center position of a sector of the second frequency corresponding to the third frequency, without creating a Voronoi region based on the center position of the sector of the third frequency, according to the correspondence stored in the overlay information storage means, and the population information calculation means calculates the population information of the Voronoi region of the first frequency and the population information of the Voronoi region of the second frequency, using population information in the sector of the first frequency as the population information of the Voronoi region of the first frequency and using population information in the sector of the second frequency and population information in the sector of the third frequency as the population information of the Voronoi region of the second frequency.

According to the present invention, the population information is calculated by creating a Voronoi region corresponding to a sector of the second frequency, without creating a Voronoi region corresponding to a sector of the third frequency, based on the overlay relationship between the second frequency and the third frequency thereby eliminating non-uniformity in population distribution due to the overlay relationship.

Further, a management server according to the invention includes an acquisition means for acquiring location information and identification information of a mobile equipment from each of a plurality of mobile equipments, a basic table storage means for storing a basic table associating the location information acquired by the acquisition means, acquisition time of the location information, and the identification information of a mobile equipment, and a calculation means for calculating population distribution information at given time based on the basic table stored in the basic table storage means.

According to the present invention, location information and identification information of a mobile equipment are acquired from each of a plurality of mobile equipments, and population distribution information at given time can be calculated based on the acquired location information, acquisition time of the location information, and the identification information of the mobile equipment. More detailed population distribution information can be thereby enabled, and provision of the detailed population distribution information enables provision of various services.

Further, it is preferred in the management server according to the invention that the basic table storage means further stores user attribute information of a mobile equipment in association, and the calculation means calculates population distribution information at given time for each attribute information.

According to the present invention, population distribution information at given time can be calculated for each attribute information.

It is also preferred that the management server according to the invention further includes an aggregation region storage means for defining and storing a plurality of aggregation regions composed of given regions, and the basic table storage means stores the basic table with respect to each aggregation region defined by the aggregation region storage means, and the calculation means calculates population distribution information at given time for each aggregation region stored in the basic table storage means.

According to the present invention, population distribution information at given time can be calculated for each predetermined aggregation region.

It is also preferred in the management server according to the invention that the aggregation region storage means defines a sector region defined by a radio base station as the aggregation region.

It is also preferred in the management server according to the invention that the aggregation region storage means defines a rectangular region having a predetermined size as the aggregation region.

It is also preferred in the management server according to the invention that the aggregation region storage means defines a region determined by a unit of prefectures or cities and towns as the aggregation region.

It is also preferred in the management server according to the invention that the calculation means calculates an average value of a plurality of population distribution information at the same acquisition time during a given period, and calculates the average value as the population distribution information.

According to the present invention, more accurate population distribution information can be calculated by calculating an average value of a plurality of population distribution information at the same acquisition time during a given period and calculating the average value as the population distribution information.

It is also preferred in the management server according to the invention that the calculation means calculates a population as the population distribution information.

It is also preferred in the management server according to the invention that the calculation means calculates a population ratio of an arbitrary attribute to a total as the population distribution information.

It is also preferred in the management server according to the invention that the acquisition means acquires detailed location information being coordinate information as the location information.

It is also preferred in the management server according to the invention that the acquisition means acquires rough location information including sector information specifying a sector and location information in the sector as the location information.

It is also preferred in the management server according to the invention that the acquisition means acquires detailed location information being coordinate information and rough location information including sector information specifying a sector and location information in the sector as the location information at predetermined periods, when an acquisition period of the detailed location information is shorter than an acquisition period of the rough location information, the acquisition means selects the detailed location information as the location information, and when an acquisition period of the detailed location information is longer than an acquisition period of the rough location information, the acquisition means selects information acquired closest to timing of using the location information as the location information.

According to the present invention, appropriate location information can be selected in the case where both of rough location information and detailed location information can be acquired. By preferentially selecting the detailed location information on the basis of the acquisition period, more accurate location information can be acquired.

Further, a management server according to the invention preferably includes a location information storage means for storing location information acquired by the acquisition means, user attribute information, identification information of a mobile equipment, and a location information type in association with one another, an expansion factor calculation means for aggregating the number of mobile equipments with each attribute information based on information stored in the location information storage means, and calculating an expansion factor being a ratio of the aggregated number of mobile equipments to a population of each attribute information of statistical information obtained by pre-examination for each attribute information, an expansion factor storage means for storing the expansion factor calculated by the expansion factor calculation means in association with the location information, the attribute information, the identification information of a mobile equipment, and the location information type stored in the location information storage means, an aggregation region storage means for defining aggregation regions, an area ratio calculation means for calculating an area ratio of a sector region defined by a sector to an overlap region where the sector region and an aggregation region defined by the aggregation region storage means overlap for each overlap region, and a basic table creation means for generating rough location information data by adding the area ratio calculated by the area ratio calculation means in association with each aggregation region to information with the location information type stored in the expansion factor storage means indicating rough location information, generating detailed location information data by adding information of an area ratio 1 to information with the location information type stored in the expansion factor storage means indicating detailed location information, and creating a basic table associating a population contribution rate obtained by multiplying the expansion factor by the area ratio with identification information of a mobile equipment, attribute information and aggregation regions. The basic table storage means stores the basic table created by the basic table creation means, and the calculation means calculates population distribution information based on the population contribution rate stored in the basic table storage means.

**Advantageous Effects of Invention**

According to the present invention, it is possible to acquire statistical information using a mobile equipment.

**Brief Description of Drawings**

Fig. 1 is a system configuration diagram of a communication system 10 according to an embodiment.
Fig. 2 is a block diagram showing functional configurations of an RNC 300 and a switching equipment 400.
Fig. 3 is a sequence chart showing processing of a mobile equipment 100, the RNC 300, the switching equipment 400 and a control center 500 in the communication system 10.
Fig. 4 is an explanatory diagram showing a relationship between a BTS 200 and a sector.
Fig. 5 is an explanatory diagram showing an example of a management table of subscriber information managed in the switching equipment 400.
Fig. 6 is a block diagram showing functions of a management server 503a.
Fig. 7 is an explanatory diagram showing a management table stored in a subscriber location information storage unit 511.
Fig. 8 is an explanatory diagram showing a management table containing user attribute information.
Fig. 9 is an explanatory diagram showing an attribute combination management table in which location information and subscriber information are associated.
Fig. 10 is an explanatory diagram showing an output example of attribute distribution derived by a sector level attribute distribution derivation unit 517.
Fig. 11 is a flowchart showing a process of the management server 503a that performs statistical processing for each sector.
Fig. 12 is a system configuration diagram of a communication system 10 according to a second embodiment.
Fig. 13 is a block diagram showing functions of a management server 503b installed in a mobile demography unit 503 and a management server 504b installed in a visualization solution unit 504.
Fig. 14 is a block diagram showing a hardware configuration of the management server 503b or the management server 504b.
Fig. 15 is an explanatory diagram showing an overlay management information table.
Fig. 16 is an explanatory diagram showing a sector information management table.
Fig. 17 is an explanatory diagram showing an intermediate table.
Fig. 18 is an explanatory diagram of a 2GHz band/1.7GHz band Voronoi region management table.
Fig. 19 is an explanatory diagram of a 800MHz band Voronoi region management table.
Fig. 20 is an explanatory diagram showing a new partitioned region management table.
Fig. 21 is an explanatory diagram showing a Voronoi region for each frequency.
Fig. 22 is an explanatory diagram showing new partitioned regions created from the 2GHz band/1.7GHz band Voronoi region and the 800MHz band Voronoi region.
Fig. 23 is a flowchart showing an operation of the management server 503b.
Fig. 24 is an explanatory diagram showing a population information management table.
Fig. 25 is an explanatory diagram showing a regional population information management table.
Fig. 26 shows a schematic diagram when a new partitioned region is partitioned using a given mesh region.
Fig. 27 is an explanatory diagram showing a mesh management table.
Fig. 28 is an explanatory diagram showing a population distribution mesh management table.
Fig. 29 is a flowchart showing an operation of the management server 504b.
Fig. 30 is a block diagram showing functions of a management server 503c according to a third embodiment.

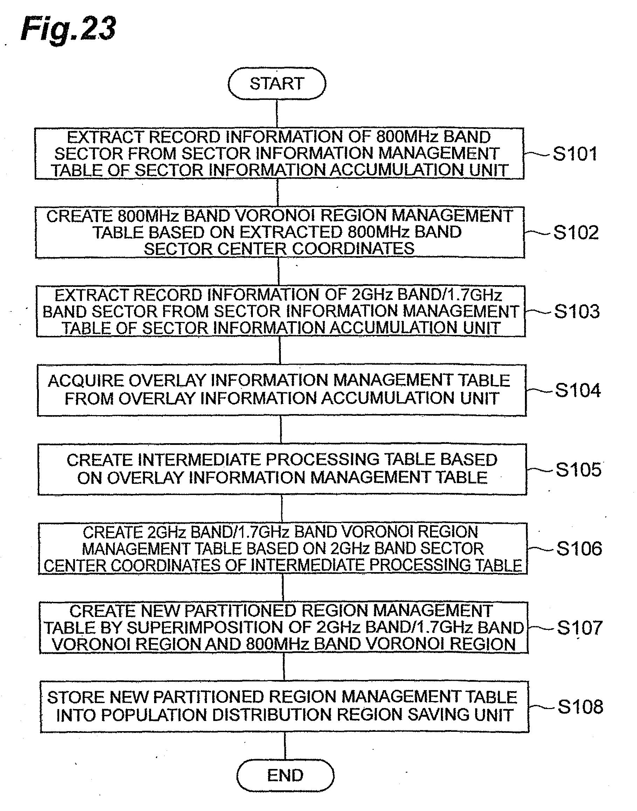

Fig. 23 is a flowchart showing an operation of the management server 503c according to a third embodiment.

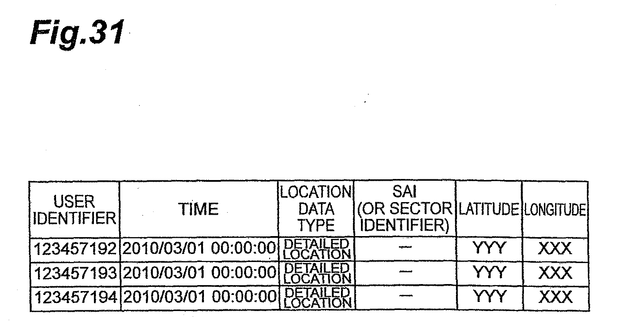

Fig. 31 is an explanatory diagram showing information acquired by a detailed location information acquisition unit 551.

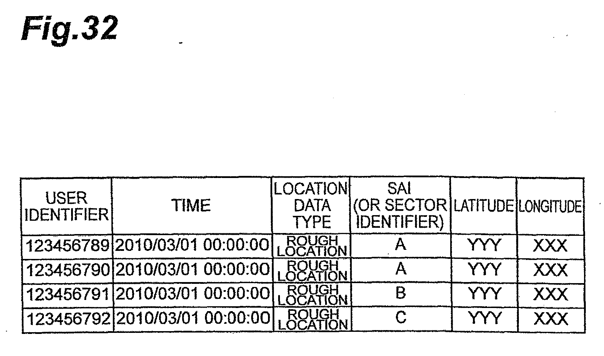

Fig. 32 is an explanatory diagram showing information acquired by a rough location information acquisition unit 552.

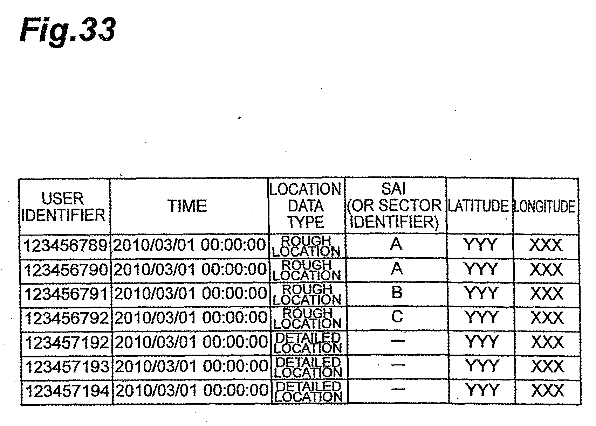

Fig. 33 is an explanatory diagram of information stored in a subscriber location information storage unit 553.

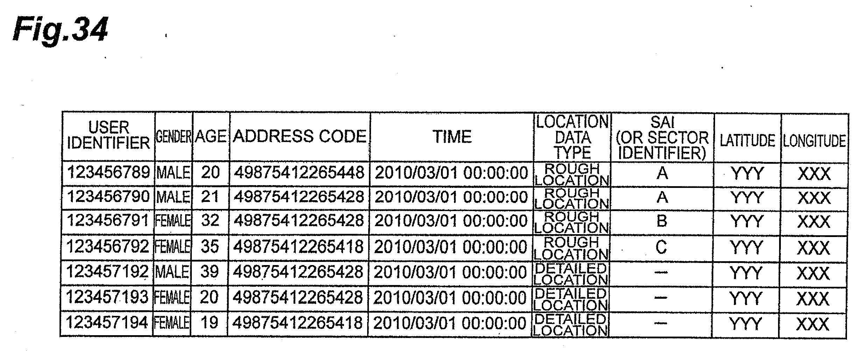

Fig. 34 is an explanatory diagram showing distribution information generated by a subscriber attribute information combining unit 557.

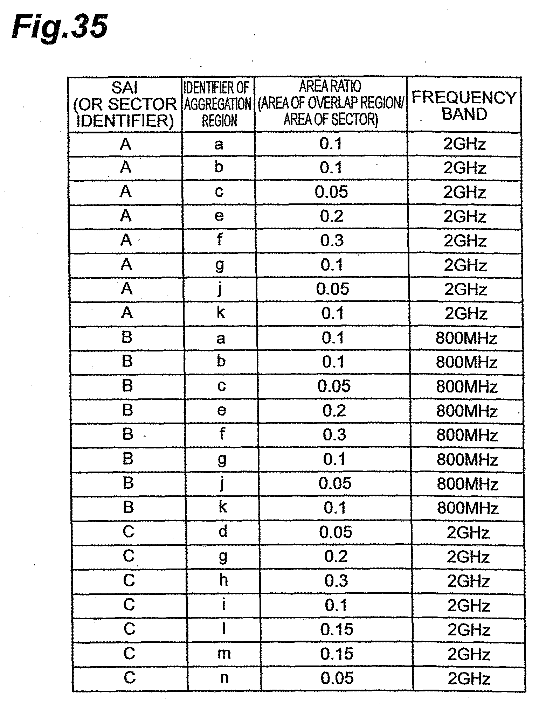

Fig. 35 is an explanatory diagram showing management information generated by a population distribution mesh creation unit 563.

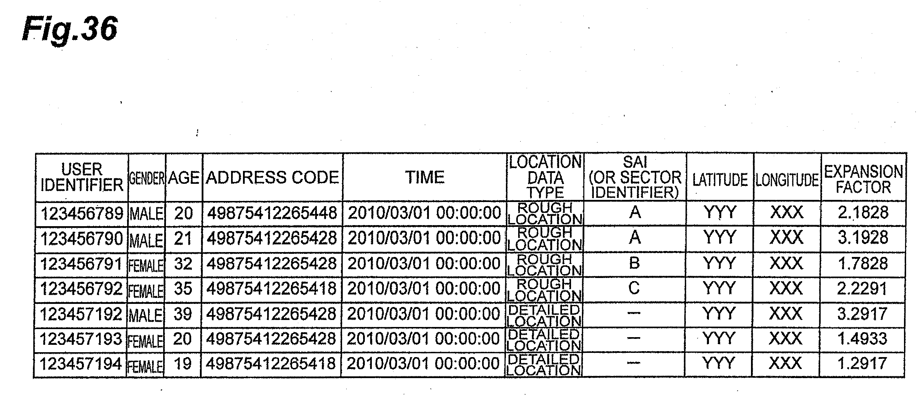

Fig. 36 is a diagram showing a management table in which an expansion factor calculated by an expansion factor calculation unit 559 is assigned to each user.

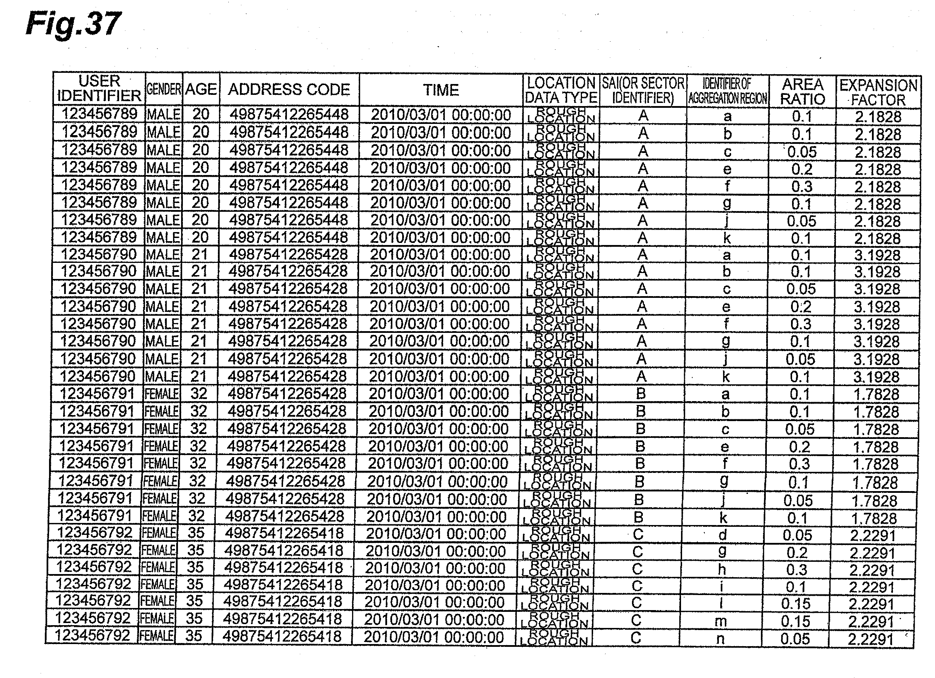

Fig. 37 is an explanatory diagram showing an intermediate table created using rough location information by a basic table creation unit 565.

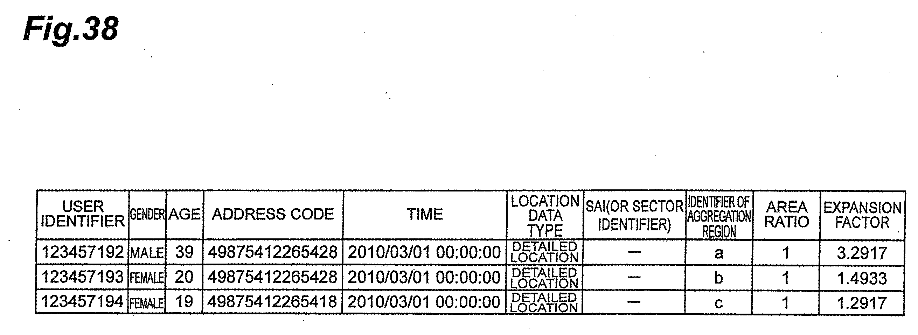

Fig. 38 is an explanatory diagram showing an intermediate table created using detailed location information by the basic table creation unit 565.

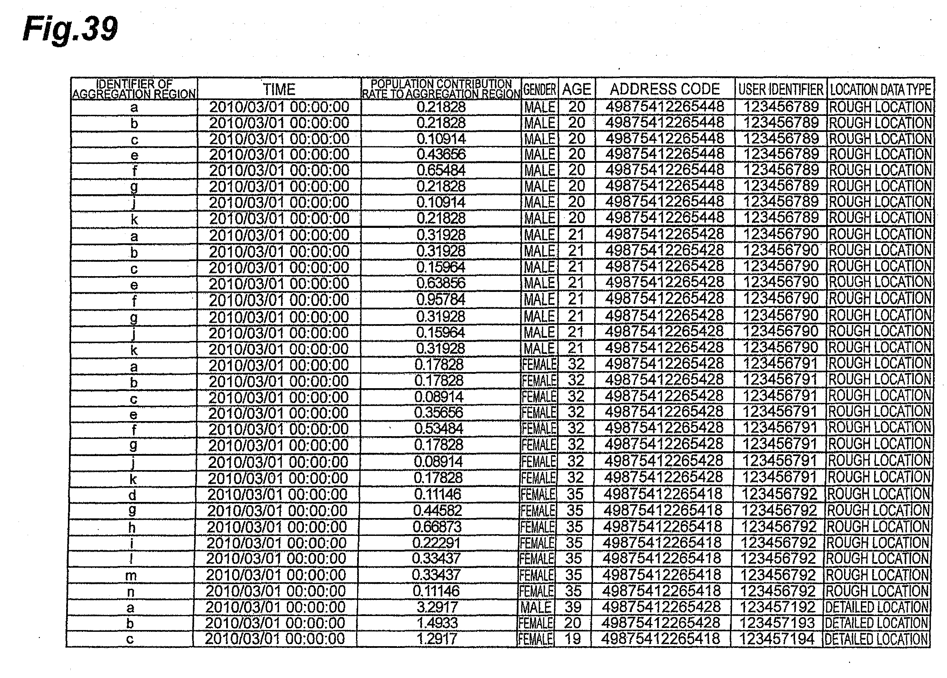

Fig. 39 is an explanatory diagram showing a basic table created by the basic table creation unit 565.

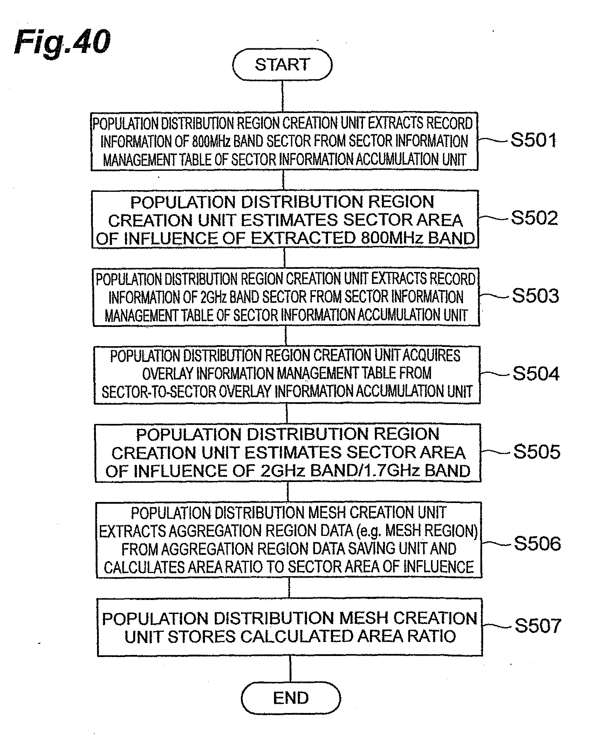

Fig. 40 is a flowchart showing a process of creating aggregation region management data in the population distribution mesh creation unit 563.

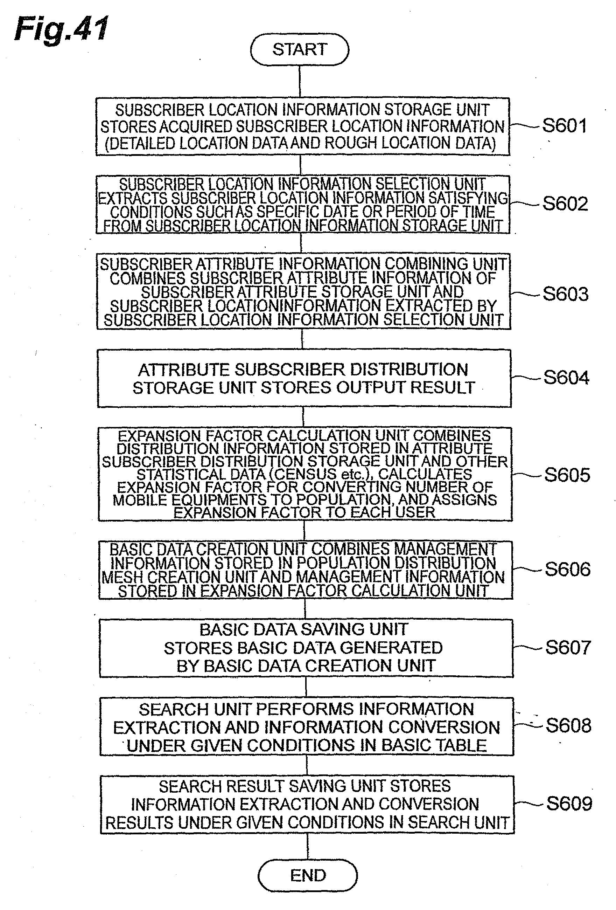

Fig. 41 is a flowchart showing a process of creating a basic table and a process of search processing and statistical processing using the basic table in the management server 503c.

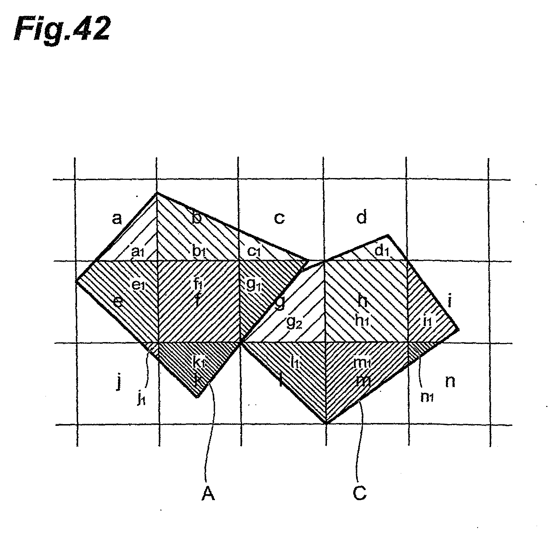

Fig. 42 is a conceptual diagram showing partition of a sector region by a mesh region, which is an aggregation region.

## Description of Embodiments

Hereinafter, preferred embodiments of the present invention are described with reference to the appended drawings. The same elements will be denoted by the same reference symbols, and the redundant description thereof will be omitted where possible.

[First embodiment]

In the first embodiment, the following issue is addressed. Specifically, because location information containing the coordinates of latitude and longitude is managed in the related art, it is not appropriate to manage user attribute distribution information on a sector-by-sector basis.

In light of the foregoing, an object of the embodiment of the present invention is to provide a communication system and a statistical processing method capable of performing statistical processing of user attribute distribution information in a given range such as a sector. The first embodiment is described hereinafter with reference to the drawings.

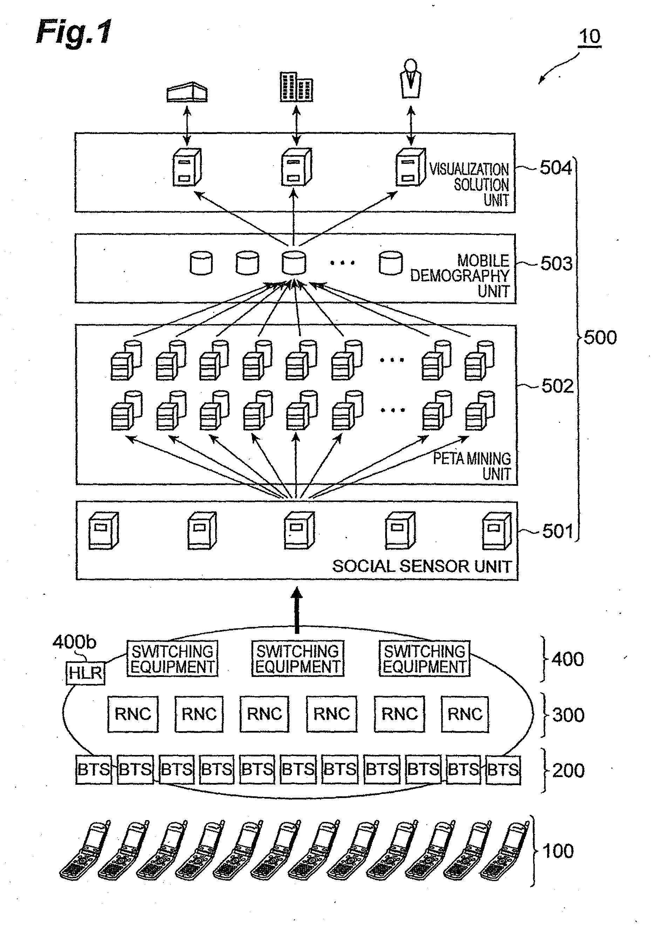

Fig. 1 is a system configuration diagram of a communication system 10 according to the embodiment. As shown in Fig. 1, the communication system 10 includes a mobile equipment 100, a BTS (Base Transceiver Station) 200, an RNC (Radio Network Controller) 300, a switching equipment 400, and a control center 500. Further, the control center 500 includes a social sensor unit 501, a peta mining unit 502, a mobile demography unit 503, and a visualization solution unit 504.

The switching equipment 400 collects SAI (Subscriber Area ID), which is a sector ID of a sector of the mobile equipment 100, through the BTS 200 and the RNC 300. When the mobile equipment 100 is within a sector, the RNC 300 can grasp and acquire the SAI of the sector. The switching equipment 400 can receive the SAI of the mobile equipment 100 acquired in this manner when the mobile equipment 100 executes communication connection. The switching equipment 400 stores the received SAI and outputs the collected SAIs to the control center 500 at predetermined timing or in response to a request from the control center 500. Note that typically about 1000 RNCs 300 are located all over Japan. On the other hand, about 300 switching equipments 400 are located in Japan.

The control center 500 includes the social sensor unit 501, the peta mining unit 502, the mobile demography unit 503, and the visualization solution unit 504 as described above, and each unit performs statistical processing using the location information of the mobile equipment 100.

The social sensor unit 501 is a server device that collects data including the SAI of the mobile equipment 100 and the like from each switching equipment 400. The social sensor unit 501 is configured to be able to receive data output from the switching equipment 400 at regular intervals or acquire data from the switching equipment 400 according to the timing predetermined in the social sensor unit 501.

The peta mining unit 502 is a server device that converts the data received from the social sensor unit 501 into a predetermined data format. For example, the peta mining unit 502 performs sorting using the user ID as a key or sorting by area.

The mobile demography unit 503 is a server device that performs aggregation processing of the data processed in the peta mining unit 502, which is, counting of each item. For example, the mobile demography unit 503 can count the number of users located in a certain area or aggregate the area distribution.

The visualization solution unit 504 is a server device that processes the data aggregated in the mobile demography unit 503 into visible. For example, the visualization solution unit 504 can map the aggregated data onto a map. Note that the statistically processed information is processed so as not to identify a person and the like to avoid invasion of privacy as a matter of course.

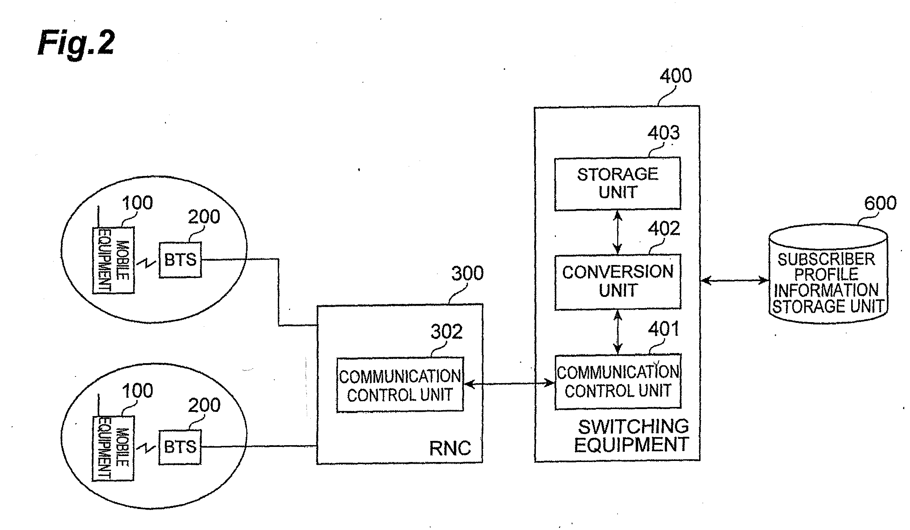

Hereinafter, configurations of the RNC 300 and the switching equipment 400 are described. Fig. 2 is a block diagram showing functional configurations of the RNC 300 and the switching equipment 400. The RNC 300 includes a communication control unit 302. Further, the switching equipment 400 includes a communication control unit 401, a conversion unit 402, and a storage unit 403.

The RNC 300 is described first. The communication control unit 302 is a part that performs communication connection with the mobile equipment 100 through the BTS 200, and for example, performs communication connection processing based on transmission or reception from the mobile equipment 100 and communication connection processing based on a location registration request. In this embodiment, the communication control unit 302 can further add the SAI of the mobile equipment 100 to Initial UE Message used for communication connection processing and transmit it to the switching equipment 400. Note that the Initial UE Message contains instruction information indicating transmission or location registration request, TMSI (Temporary Mobile Subscriber Identity) uniquely identifying the mobile equipment 100, and SAI. The TMSI is ID information sent out from the switching equipment 400 when the mobile equipment 100 connects to a network.

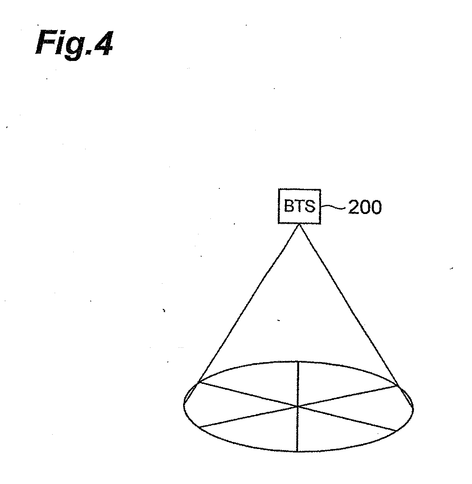

The communication control unit 302 can receive the SAI of a sector where the mobile equipment 100 is located from the BTS 200. Fig. 4 is an explanatory diagram showing a relationship between the BTS 200 and sectors. The BTS 200 is located at the center of a region represented by a circle, and a plurality of parts equally divided about the BTS 200 are sectors. For example, in Fig. 4, the communication area of the BTS 200 is composed of six sectors at maximum, and the RNC 300 can grasp in which sector the mobile equipment 100 is located through the BTS 200. For example, the RNC 300 can grasp the SAI indicating the sector ID and notify the SAI to the switching equipment 400.

Hereinafter, the switching equipment 400 is described. The communication control unit 401 is a part that receives Initial UE Message transmitted from the RNC 300 and performs communication connection processing using the Initial UE Message. Further, the communication control unit 401 transmits a user identifier, SAI and SAI acquisition time to the control center 500 at regular intervals or in response to a request from the control center 500.

The conversion unit 402 is a part that converts TMSI contained in the Initial UE Message received by the communication control unit 401 into a user identifier. At the time of conversion, the conversion unit 402 extracts a user identifier associated with the TMSI from a subscriber profile information storage unit 600 that stores subscriber profile information and converts the TMSI into the extracted user identifier. Note that the subscriber profile information storage unit 600 is disposed in HLR (Home Location Register), for example, and manages and stores TMSI and user identifier in association with each other.

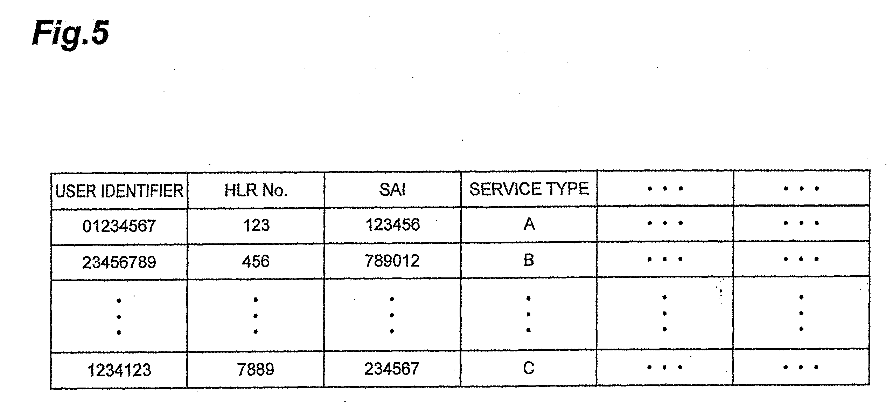

The storage unit 403 is a part that stores user identifier, SAI of the mobile equipment 100 contained in the Initial UE Message, and time when the SAI is acquired in association with one another. The SAI stored in the storage unit 403 is collected according to communication processing by the communication control unit 401 at predetermined timing or in response to a request from the control center 500. The storage unit 403 is stored in the form as shown in Fig. 5, for example. Fig. 5 is an explanatory diagram showing an example of a management table of subscriber information managed in the switching equipment 400. As shown in Fig. 5, user identifier, HLR number, SAI, and service type (communication service that can be provided to mobile equipment etc.) are stored in association with one another.

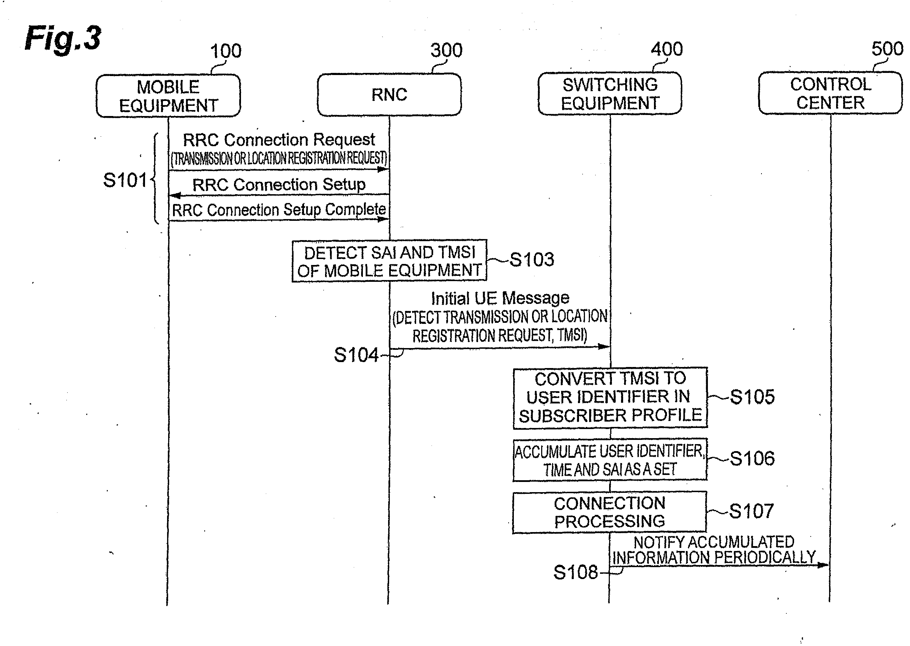

Hereinafter, processing of the communication system 10 having the above-described configuration is described. Fig. 3 is a sequence chart showing processing of the mobile equipment 100, the RNC 300, the switching equipment 400 and the control center 500 in the communication system 10.

When a transmission request or a location registration request is output from the mobile equipment 100, the RNC 200 acquires SAI (sector ID) indicating the area location of the mobile equipment 100 from the base transceiver station 200 in according to the request (S101). Then, in the RNC 300, the communication control unit 302 extracts SAI, which is the sector ID of a sector where the mobile equipment 100 is located, and TMSI indicating the mobile equipment 100 (S103). The communication control unit 302 adds the acquired SAI and TMSI to Initial UE Message and transmits it to the switching equipment 400 (S104).

In the switching equipment 400, the communication control unit 401 receives the Initial UE Message, and the conversion unit 402 converts the TMSI contained in the Initial UE Message to the user identifier of the mobile equipment 100 (S105). Then, the converted user identifier, the SAI acquisition time, and the SAI are stored in association into the storage unit 403 (S106). After that, when a transmission request is performed in S101, connection processing to its destination is performed (S 107).

The user identifier, SAI acquisition time and SAI stored in the storage unit 403 are transmitted to the control center 500 at regular intervals or in response to a request from the control center 500 and acquired (S108).

Although the SAI of the mobile equipment can be notified to the switching equipment 400 and the control center 500 using the Initial UE Message in the above manner, it not limited thereto. For example, as an alternative example of the embodiment, the communication control unit 302 may notify the TMSI and SAI of the mobile equipment 100 using a Location Report signal, in place of the Initial UE Message, at the time of handover. The Location Report signal is a signal specified in the 3GPP TS25.413. In this case, the switching equipment 400 is configured to be able to receive the Location Report signal as a matter of course.

Hereinafter, operation and effect of the communication system 10 having the above-described configuration are described. In the RNC 300 of the communication system 10 in this embodiment, when the communication control unit 302 performs communication connection processing with one mobile equipment 100 among a plurality of mobile equipments 100, it acquires the SAI of the sector where the one mobile equipment 100 is located. Then, the communication control unit 302 transmits the SAI of the mobile equipment 100 to the switching equipment 400 when establishing communication connection with the mobile equipment 100.

On the other hand, in the switching equipment 400, the communication control unit 401 receives the SAI transmitted from the RNC 300, and the storage unit 403 stores the received SAI. Then, in response to a request from the control center 500 or at regular intervals, the communication control unit 401 transmits the SAI stored in the storage unit 403 and the user identifier identifying the mobile equipment 100. In this manner, the RNC 300 and the switching equipment 400 can transmit the SAI of one mobile equipment 100 at the time of establishing communication connection, so that SAIs can be aggregated on the switching equipment 400 without imposing a load on the network traffic. Because the number of switching equipments 400 is commonly smaller than the number of RNCs 300, and it is only necessary to access the switching equipment 400 to collect SAIs, the load on the network can be reduced when collecting SAIs of mobile equipments.

In the RNC 300, the communication control unit 302 may add the SAI of one mobile equipment 100 to the Initial UE Message that is transmitted in communication connection processing with the switching equipment 400, so that SAIs of mobile equipments 100 can be aggregated on the switching equipment 400 further without imposing a load on the network.

Hereinafter, a method of statistical processing in the control center 500 that has received the SAI, the user identifier of the mobile equipment and the SAI acquisition time in the above manner is described.

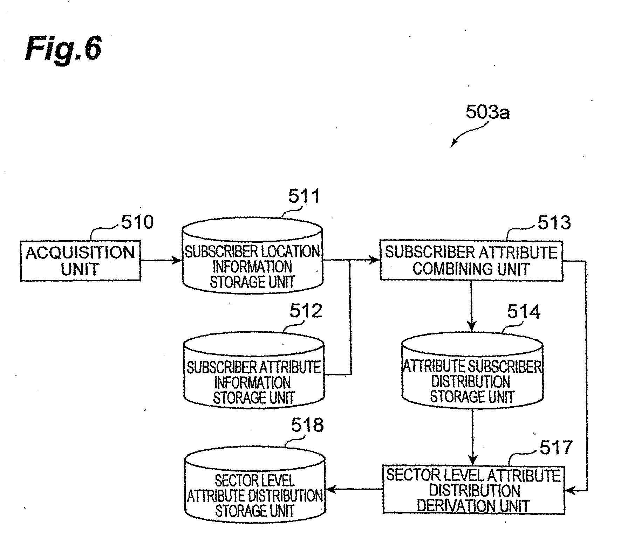

Fig. 6 is a block diagram showing functions of a management server 503a installed in the mobile demography unit 503, which is one of the control center 500. The management server 503a includes an acquisition unit 510, a subscriber location information storage unit 511, a subscriber attribute information storage unit 512, a subscriber attribute combining unit 513, an attribute subscriber distribution storage unit 516, a sector level attribute distribution derivation unit 517, and a sector level attribute distribution storage unit 518. Further, the acquisition unit 510 may be placed in the social sensor unit 501. Note that storage units including the subscriber attribute information storage unit 512, the attribute subscriber distribution storage unit 516 and the sector level attribute distribution storage unit 518 may be placed in the peta mining unit 502. Each element is described hereinbelow.

The acquisition unit 510 is a part that acquires the SAI of each mobile equipment 100, the user identifier and the SAI acquisition time that are output from the switching equipment 400 at regular intervals. Note that, although the acquisition unit 510 is placed in the mobile demography unit 503 in this embodiment, it is not limited thereto, and the acquisition unit 510 may be placed in the social sensor unit 501, and the acquired information may be stored into the subscriber location information storage unit 511.

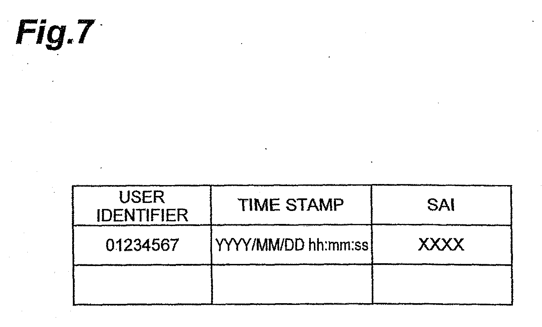

The subscriber location information storage unit 511 is a part that stores the SAI of each mobile equipment 100 acquired by the acquisition unit 510, and, in this embodiment, it is a part that stores the SAI specifying a sector in association with the user identifier for identifying the mobile equipment 100 and the SAI acquisition time. A specific example is described with reference to Fig. 7. Fig. 7 is an explanatory diagram showing a management table stored in the subscriber location information storage unit 511. As shown in Fig. 7, in the management table, user identifier, time stamp indicating acquisition time of SAI, and SAI are stored in association with one another.

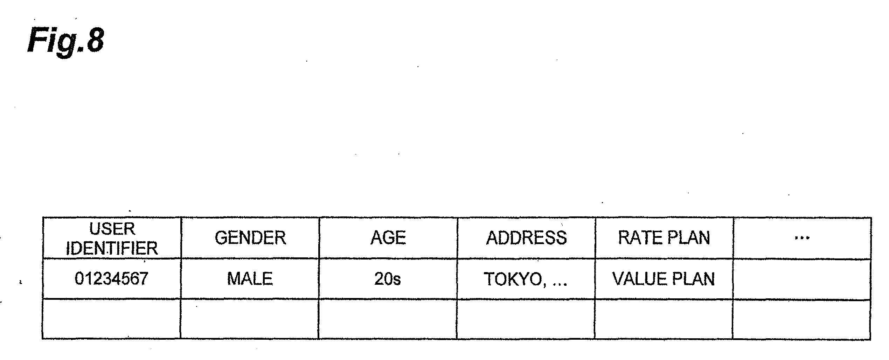

The subscriber attribute information storage unit 512 is a part that stores a management table containing attribute information of a user of the mobile equipment 100, which is a subscriber. For example, as shown in Fig. 8, subscriber information such as user identifier, gender, age, address and price plan under contract are stored in association with one another. The information is not limited to those shown in Fig. 8 as long as indicating user attribute.

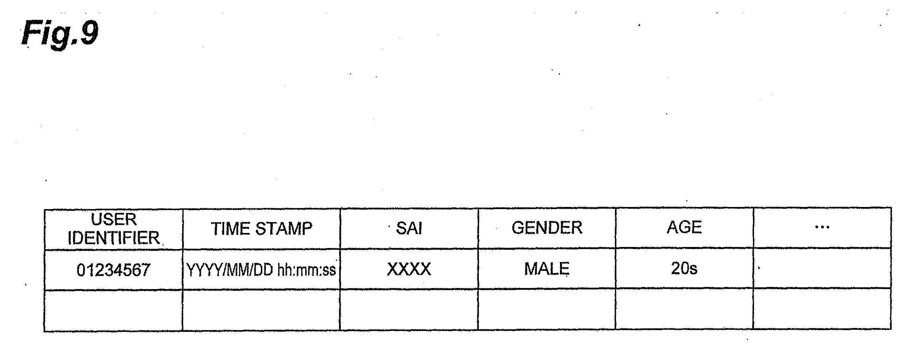

The subscriber attribute combining unit 513 is a part that combines the management table stored in the subscriber location information storage unit 511 and the management table stored in the subscriber attribute information storage unit 512 using the user identifier as a key and thereby creates an attribute combination management table. A specific example of the attribute combination management table is described with reference to Fig. 9. As shown in Fig. 9, in the attribute combination management table, information such as user identifier, time stamp, SAI, gender, age, ... (attribute information) are contained in association with one another.

The attribute subscriber distribution storage unit 516 is a part that stores the attribute combination management table output from the subscriber attribute combining unit 513.

The sector level attribute distribution derivation unit 517 is a part that derives an attribute distribution for each sector at a predetermined period, and a part that counts the number of mobile equipments with respect to each attribute in each sector based on SAI and attribute information. To be specific, the sector level attribute distribution derivation unit 517 extracts the data that have been stored from the time of the previous count processing up to the present, which is the data that have been acquired since the time of the previous count processing, and makes the extracted data unique based on the user identifier so that, when duplicate user identifiers exist in the attribute combination management table, the user identifiers are reduced to one. Then, the sector level attribute distribution derivation unit 517 counts the number of user identifiers (i.e. the number of mobile equipments) with respect to each item of the attribute combination management table after made unique.

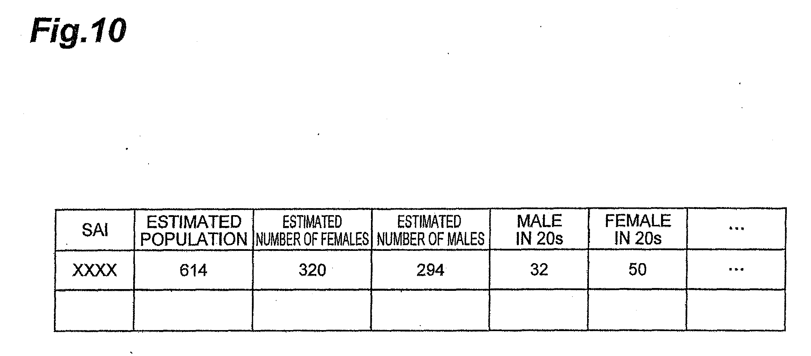

Fig. 10 shows an output example of the attribute distribution derived by the sector level attribute distribution derivation unit 517. As shown in Fig. 10, the sector level attribute distribution derivation unit 517 generates population information in which SAI, estimated population, the estimated number of females, the estimated number of males, the number of males in their twenties and the number of females in their twenties are associated with one another.

The sector level attribute distribution storage unit 518 is a part that stores the population information generated and output by the sector level attribute distribution derivation unit 517.

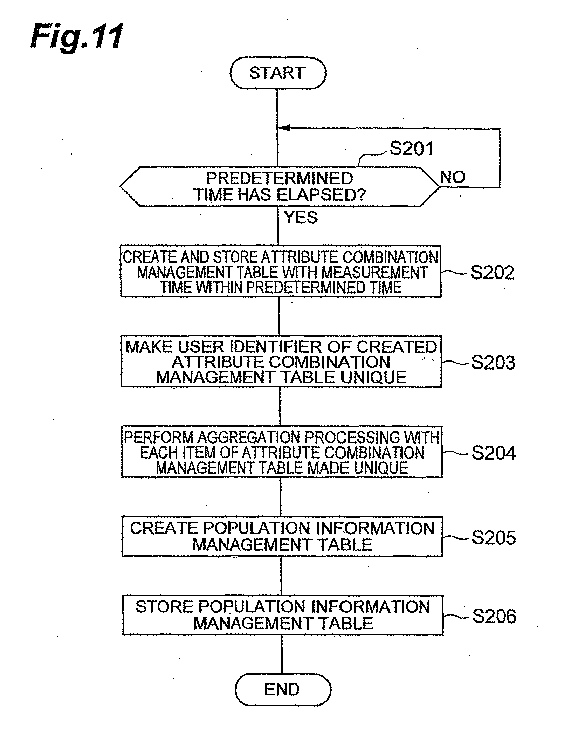

A process of the management server 503a having the above configuration is described. Fig. 11 is a flowchart showing a process of the management server 503a that performs statistical processing for each sector.

When a predetermined time has elapsed (S201), the subscriber attribute combining unit 513 extracts location information of a subscriber and attribute information of a subscriber from the subscriber location information storage unit 511 and the subscriber attribute information storage unit 512, respectively, and combines the information using the user identifier as a key to thereby create the attribute combination management table, and stores the attribute combination management table into the attribute subscriber distribution storage unit 516 (S202).

Then, the sector level attribute distribution derivation unit 517 makes the data in the attribute combination management table unique based on the user identifier (S203).

Then, the sector level attribute distribution derivation unit 517 performs aggregation processing with respect to each item of attribute information (S204), and creates a population information management table based on the aggregation processing result (S205). The created population information management table is stored into the sector level attribute distribution storage unit 518 (S206). The population information contained in the stored population information management table is used as various types of statistical information.

Hereinafter, operation and effect of the management server 503a and the communication system 10 having the above-described configuration are described. In the management server 503a of this embodiment, the acquisition unit 510 acquires, from each of a plurality of mobile equipments 100, the SAI of a sector where the mobile equipment is located together with a user identifier, which is identification information of the mobile equipment, and the subscriber location information storage unit 511 stores the acquired SAI in association with the mobile equipment. Then, the sector level attribute distribution derivation unit 517 aggregates the number of mobile equipments with respect to each attribute of the mobile equipment on a sector-by-sector basis indicated by the SAI based on the subscriber information stored in the subscriber attribute information storage unit 512 and the location information stored in the subscriber location information storage unit 511. The statistical information with respect to each attribute of the mobile equipment can be thereby grasped in a sector-by-sector manner.

Further, according to the communication system of this embodiment, at the time of communication connection with the mobile equipment 100, the RNC 300 transmits the SAI of a sector where the mobile equipment 100 is located, to the switching equipment 400 using the Initial UE Message, for example, and the switching equipment 400 can output the user identifier of the mobile equipment 100 and the SAI where the mobile equipment 100 is located to the management server 503a in response to a request from the management server 503a or at regular intervals. It is thereby possible to output the location information of each mobile equipment 100 to the management server 503a with a reduced load on the network. Accordingly, it is possible to grasp the sector where each mobile equipment 100 is located and calculate statistical information in a sector-by-sector manner with a reduced load on the network.

[Second embodiment]

In a second embodiment, the following issue is addressed. It has been desirable to create a population distribution mesh map on based on the estimated population value calculated on a sector-by-sector basis. To create the population distribution mesh map, it is necessary to accurately grasp the area of influence (cover area) of each sector; however, because the sector is an area defined by a directional antenna, it is difficult to correctly distinguish the area. In light of this, it is considered to grasp the area of influence by Voronoi partition, for example. Patent Literature 2 (Japanese Unexamined Patent Publication No. 2005-252548), for example, discloses a technique of dividing the area by Voronoi partition using the location of a base station.

As disclosed in Patent Literature 2, in the case of grasping the area by performing Voronoi partition on the basis of a base station, it is necessary to grasp the population distribution of each area partitioned on the basis of the base station. However, the base station does not always form the area in all directions but in some cases places a directional antenna in one direction and forms the area only in the direction.

Even if Voronoi partition is performed using the base station having the above property to form Voronoi regions, the area cannot be formed correctly. In light of this, it is considered to perform Voronoi partition on the basis of the center position of the sector indicating the connection area of the base station; however, the following problem occurs in this case as well.

Specifically, the existing mobile phones use different frequencies, and a frequency of 800MHz band, 1.72GHz band or 22GHz band is used, for example. The base station forms a sector for each frequency, and, even if Voronoi partition is performed about the center position of the sector formed for each frequency to grasp the population distribution using Voronoi regions obtained by the Voronoi partition, non-uniformity in population distribution occurs. This is because the number of persons able to be accommodated differs depending on the frequency, and, for example, the sector of 2GHz band can accommodate several times more users than the sector of 800MHz band. Further, because so-called overlay relationship in which sectors of different frequencies overlap is established, it is desirable to perform Voronoi partition with this taken into account.

For example, there are frequencies of 800MHz band, 1.7GHz band and 2GHz band as the frequencies to be used by mobile phones. In the 1.7GHz band and the 2GHz band, the sectors in operation have the same angle of radiation and cover the same area, and, in the 800MHz band, the sector is placed at a different angle of radiation from the sectors of the 1.7GHz band and the 2GHz band in some cases but in other cases it can overlap with the area of influence of the sectors of the 1.7GHz band and the 2GHz band because the area of influence is wide for its frequency characteristics. Accordingly, non-uniformity appears in population distribution if a Voronoi diagram is created by performing Voronoi partition about the center position of the sectors of the respective frequency bands.

In light of the foregoing, an object of the embodiment of the present invention is to provide a management server and a population information calculation method capable of calculating population information without population distribution non-uniformity as well as correctly covering the area obtained by Voronoi partition or the like.

The overview of the embodiment is as follows. Specifically, in the management server 503a, a population distribution region creation unit 535 performs Voronoi partition on the basis of the prestored sector location information at each frequency and thereby creates regions of the respective frequencies. Then, the population distribution region creation unit 535 creates a new partitioned region where a 800MHz band Voronoi region and a 2GHz band/1.7GHz band Voronoi region overlap. The population distribution region creation unit 535 then calculates population information of the new partitioned region based on the area ratio of the new partitioned region to the 800MHz band Voronoi region, the area ratio of the new partitioned region to the 2GHz band/1.7GHz band Voronoi region, and population information of the 800MHz band Voronoi region and the 2GHz band/1.7GHz band Voronoi region. This is described in detail hereinbelow.

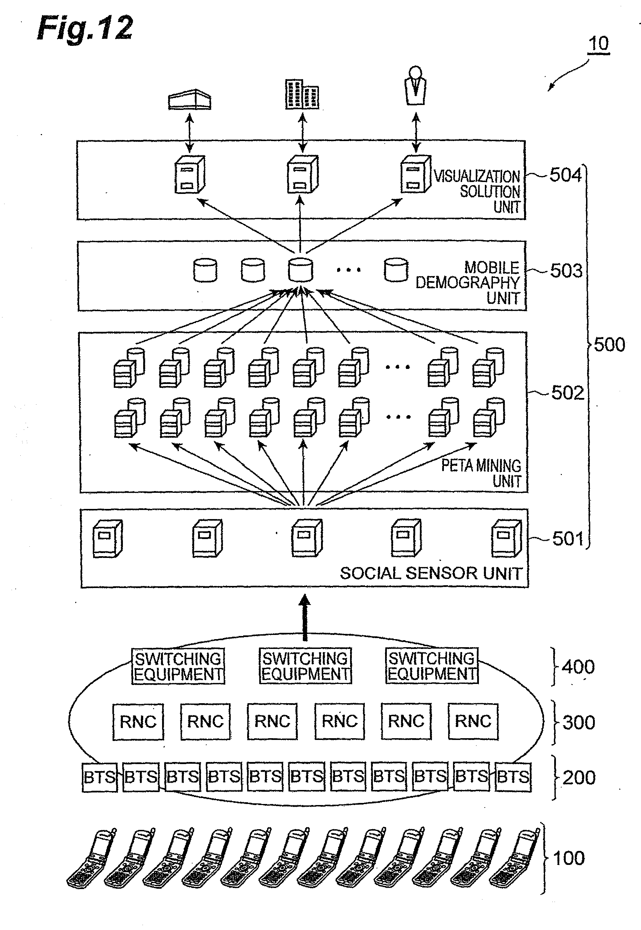

Fig. 12 is a system configuration diagram of a communication system 10 according to the embodiment. As shown in Fig. 12, the communication system 10 includes a mobile equipment 100, a BTS (Base Transceiver Station) 200, an RNC (Radio Network Controller) 300, a switching equipment 400, and a control center 500. Further, the control center 500 includes a social sensor unit 501, a peta mining unit 502, a mobile demography unit 503, and a visualization solution unit 504.

The switching equipment 400 collects location information of the mobile equipment 100 through the BTS 200 and the RNC 300. The RNC 300 can measure the location of the mobile equipment 100 at the time of making specific communication with the mobile equipment 100. The switching equipment 400 can receive the location information of the mobile equipment 100 measured in this manner when the mobile equipment 100 executes communication connection. The switching equipment 400 stores the received location information and outputs the collected location information to the control center 500 at predetermined timing or in response to a request from the control center 500.

The control center 500 includes the social sensor unit 501, the peta mining unit 502, the mobile demography unit 503, and the visualization solution unit 504 as described above, and each unit performs statistical processing using the location information of the mobile equipment 100.

The social sensor unit 501 is a server device that collects data including location information of the mobile equipment 100 and the like from each switching equipment 400. The social sensor unit 501 is configured to be able to receive data output from the switching equipment 400 at regular intervals or acquire data from the switching equipment 400 according to the timing predetermined in the social sensor unit 501.

The peta mining unit 502 is a server device that converts the data received from the social sensor unit 501 into a predetermined data format. For example, the peta mining unit 502 performs sorting using the user ID as a key or sorting by area.

The mobile demography unit 503 is a server device that performs aggregation processing of the data processed in the peta mining unit 502, which is, counting of each item. For example, the mobile demography unit 503 can count the number of users located in a certain area or aggregate the area distribution.

The visualization solution unit 504 is a server device that processes the data aggregated in the mobile demography unit 503 into visible. For example, the visualization solution unit 504 can map the aggregated data onto a map. Note that the statistically processed information is processed so as not to identify a person and the like to avoid invasion of privacy as a matter of course.

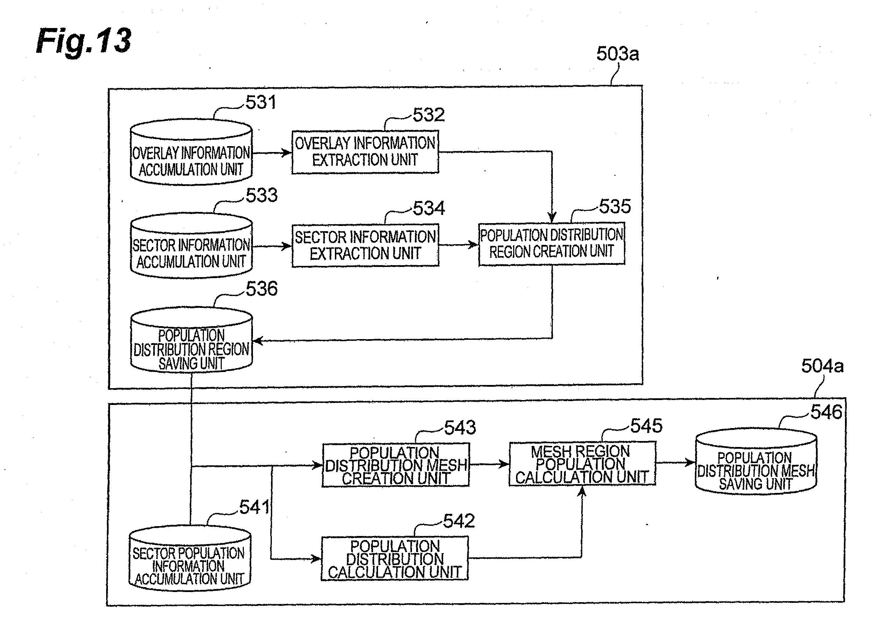

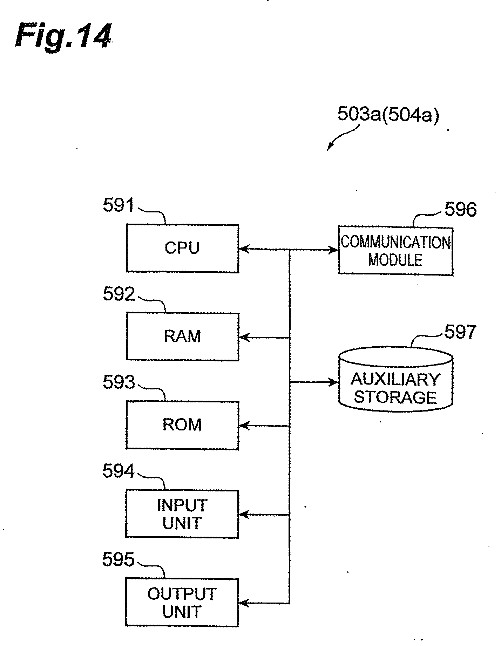

Fig. 13 is a block diagram showing functions of a management server 503b installed in the mobile demography unit 503 and a management server 504b installed in the visualization solution unit 504 in the communication system according to the embodiment. The management server 503b includes an overlay information accumulation unit 531 (overlay information storage means), an overlay information extraction unit 532, a sector information accumulation unit 533 (sector information storage means), a sector information extraction unit 534, a population distribution region creation unit 535 (Voronoi region creation means, partitioned region creation means), and a population distribution region saving unit 536. Further, the management server 504b includes a sector population information accumulation unit 541, a population distribution calculation unit 542, a population distribution mesh creation unit 543, a mesh region population calculation unit 545, and a population distribution mesh saving unit 546. The management servers 503b and 504b are composed of hardware as shown in Fig. 14.

Fig. 14 is a hardware configuration diagram of the management server 503b. The management server 503b shown in Fig. 13 is physically configured as a computer system including a CPU 591, RAM 592 and ROM 593 serving as a main storage, an input unit 594 such as a keyboard and a mouse serving as an input device, an output unit 595 such as a display, a communication module 596 serving as a data transmitting and receiving device such as a network card, an auxiliary storage 597 such as a hard disk and the like as shown in Fig. 14. The functions illustrated in Fig. 13 are implemented by loading given computer software onto the hardware such as the CPU 591 or the RAM 592 shown in Fig. 14, making the input unit 594, the output unit 595 and the communication module 596 operate under control of the CPU 591, and performing reading and writing of data in the RAM 592 or the auxiliary storage 597. The management server 504b has the same configuration. Each functional block is described hereinafter based on the functional blocks shown in Fig. 13.

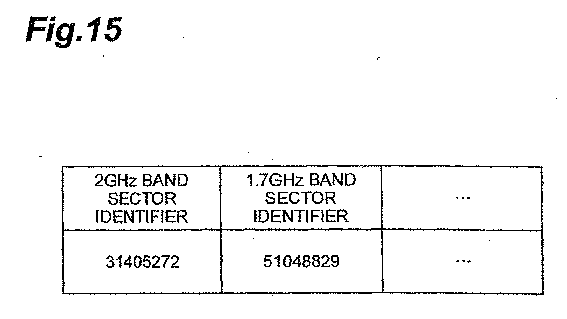

The overlay information accumulation unit 531 is a part that stores an overlay management information table indicating an overlay relationship between sectors. The overlay management information table stores a sector identifier assigned to each frequency band used in each sector, and in Fig. 15, stores a 2GHz band sector identifier and a 1.7GHz band sector identifier in association with each other. Specifically, the overlay management information table of Fig. 15 shows that a terminal using the frequency of 2GHz band and a terminal using the frequency of 1.7GHz band can be used in the same area of influence. Note that the overlay management information table is previously defined and specified by a carrier or the like.

The overlay information extraction unit 532 is a part that extracts overlay information. The extraction is performed when an instruction to create the population distribution is given by an operator of the mobile demography unit 503.

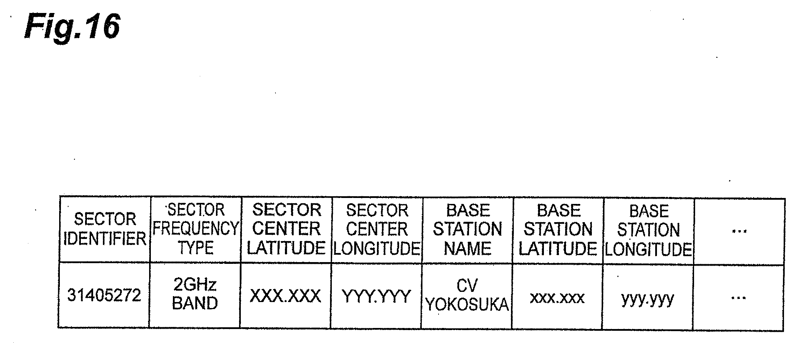

The sector information accumulation unit 533 is a part that stores a sector information management table containing information related to each sector specified on the basis of a base station. As shown in Fig. 16, the sector information management table contains sector identifier indicating a sector, sector frequency type, sector center latitude, sector center longitude, base station name, base station latitude, and base station longitude in association with one another. The sector frequency type indicates which of a first frequency band (800MHz band) and a second frequency band (1.7GHz band and 2GHz band) the type of a frequency band used in the sector is. Fig. 16 shows the case where the frequency of 2GHz band is used. Further, the sector center latitude and the sector center longitude are information indicating the center position of the sector. Furthermore, the sector information management table contains the base station name, and the base station latitude and the base station longitude, which are location information of the base station, in association with one another.

The sector information extraction unit 534 is a part that extracts sector information from the sector information management table stored in the sector information accumulation unit 533.

The population distribution region creation unit 535 is a part that creates a population distribution region management table based on the information of the sector information management table and the information of the overlay management information table. Specifically, the population distribution region creation unit 535 creates the population distribution region management table in which a new partitioned region where the sector of the first frequency band and the sector of the second frequency band overlap, and the area ratios to the sector of the first frequency band and to the sector of the second frequency band are associated with each other. This is described in further detail hereinbelow.

First, the population distribution region creation unit 535 causes the sector information extraction unit 534 to extract the sector information with the sector frequency type of 1.7/2GHz band from the sector information accumulation unit 533. Then, the population distribution region creation unit 535 causes the overlay information extraction unit 532 to extract the overlay information management table from the overlay information accumulation unit 531 and acquires the extracted overlay information management table. Then, the population distribution region creation unit 535 creates an intermediate processing table according to the overlay information management table.

For example, the sector information extraction unit 534 extracts the sector information with the sector frequency type of 1.7GHz band or 2GHz band from the sector information management table of the sector information accumulation unit 533, and the population distribution region creation unit 535 acquires the overlay management information from the overlay information accumulation unit 531 using the overlay information extraction unit 532, and creates the intermediate processing table. In other words, the information to enable processing on the basis of the center position of the sector using the 2 GHz frequency band is generated.

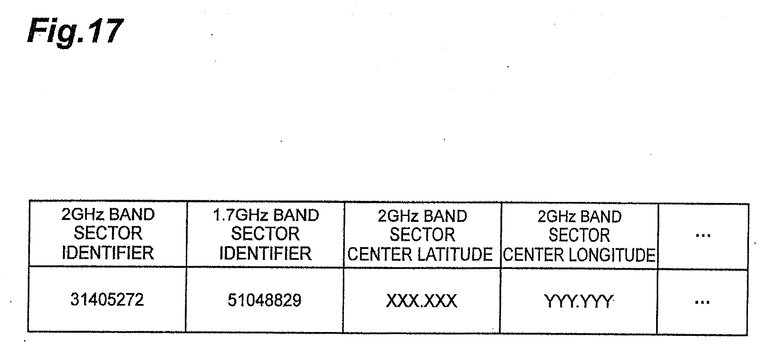

Fig. 17 shows a specific example of the intermediate table. As shown in Fig. 17, the intermediate table contains the sector identifier of the 2GHz band, the sector identifier of the 1.7GHz band, the sector center latitude of the 2GHz band, and the sector center longitude of the 2GHz band in association with one another based on the overlay information.

Then, the population distribution region creation unit 535 performs Voronoi partition using the center position of the 2GHz band sector and creates a Voronoi diagram (diagram of partition into Voronoi regions). It then creates a 2GHz band/1.7GHz band Voronoi region management table in which the created Voronoi regions, the area of the Voronoi regions, and the sector identifiers of the 2GHz band and the 1.7GHz band are associated with one another.

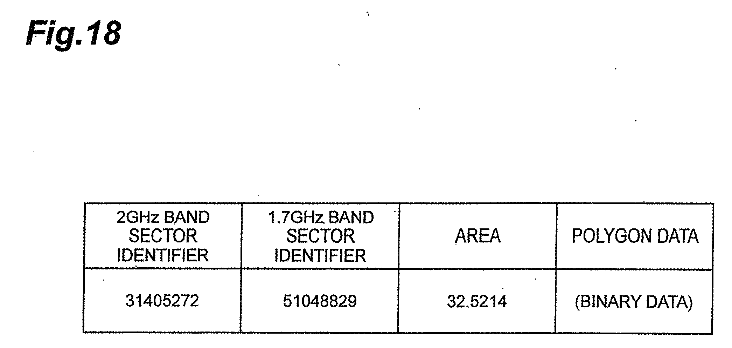

Fig. 18 is an explanatory diagram of the 2GHz band/1.7GHz band Voronoi region management table. As shown in Fig. 18, the 2GHz band/1.7GHz band Voronoi region management table contains the 2GHz band sector identifier, the 1.7GHz band sector identifier, the area of the Voronoi regions, and polygon data of the Voronoi regions (which is binary data indicating the shape of the Voronoi regions, and to which location information is provided) in association with one another.

Likewise, the sector information (sector center latitude, sector center longitude) with the sector frequency type of 800MHz band is extracted, and Voronoi partition is performed using the sector information to create Voronoi regions. Then, the area of each Voronoi region is calculated, thereby creating a 800MHz band Voronoi region management table.

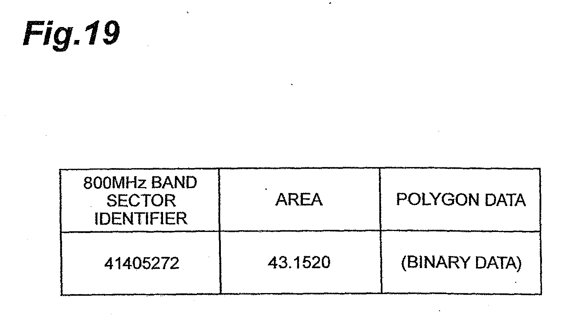

Fig. 19 is an explanatory diagram of the 800MHz band Voronoi region management table. As shown in Fig. 19, the 800MHz band Voronoi region management table contains the 800MHz band sector identifier, the area of the Voronoi regions, and polygon data of the Voronoi regions (which is binary data and to which location information is provided) in association with one another.

The population distribution region creation unit 535 superimposes the 1.7GHz band/2GHz band Voronoi region and the 800MHz band Voronoi region on top of each other according to their location information, using the created 1.7GHz band/2GHz band Voronoi region management table and the 800MHz band Voronoi region management table. By the superimposition, the region where the 1.7GHz band/2GHz band Voronoi region and the 800MHz band Voronoi region overlap, and determines the extracted region as a new partitioned region. The population distribution region creation unit 535 assigns a partitioned region identifier to the new partitioned region, calculates the area ratio to the 1.7GHz band/2GHz band Voronoi region and the area ratio to the 800MHz band Voronoi region, and creates a new partitioned region management table containing those information.

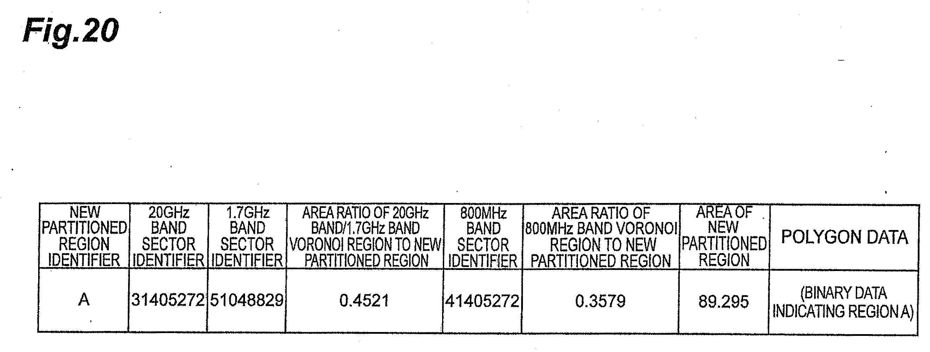

Fig. 20 is an explanatory diagram showing a specific example of the new partitioned region management table. As shown in Fig. 20, the new partitioned region management table stores new partitioned region identifier, 2GHz band sector identifier, 1.7GHz band sector identifier, the area ratio of the 2GHz band/1.7GHz band Voronoi region to the new partitioned region (=new partitioned region/Voronoi region), 800MHz band sector identifier, the area ratio of the 800MHz band Voronoi region to the new partitioned region (=new partitioned region/Voronoi region), the area of the new partitioned region, and polygon data (which is binary data and contains image data indicating the shape of the new partitioned region and location information for superimposition on the Voronoi region etc.) in association with one another.

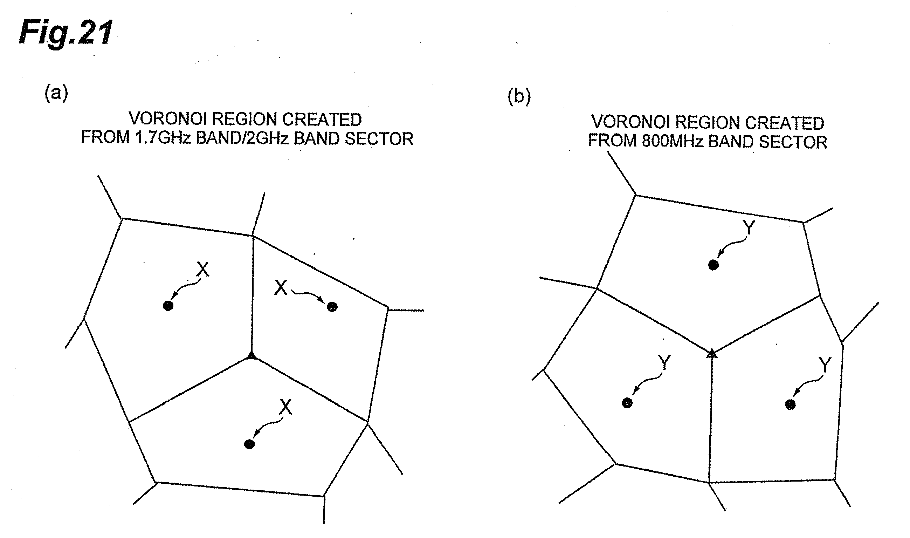

The process concept of the above-described population distribution region creation unit 535 is described hereinafter using a schematic diagram. Fig. 21 (a) shows a specific example of polygon data stored in the 2GHz band/1.7GHz band Voronoi region management table. Fig. 21(b) shows a specific example of polygon data stored in the 800MHz band Voronai region management table.

The 2GHz band/1.7GHz band Voronoi region is created by the population distribution region creation unit 535 by performing Voronoi partition on the basis of the sector center position X of the 2GHz band sector. Further, the 800MHz band Voronoi region is created by the population distribution region creation unit 535 by performing Voronoi partition on the basis of the sector center position Y of the 800MHz band sector.

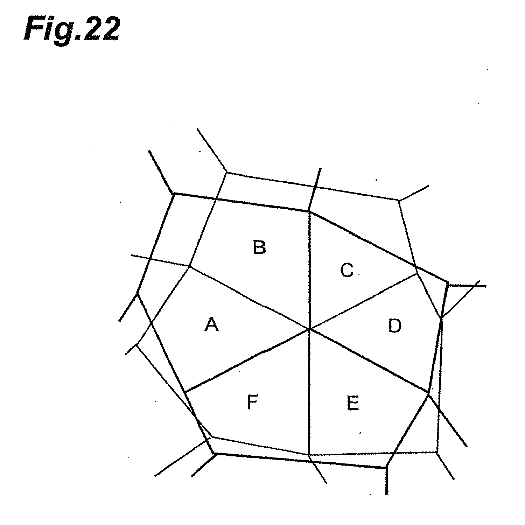

Then, the population distribution region creation unit 535 superimposes the created 2GHz band/1.7GHz band Voronoi region and 800MHz band Voronoi region on top of each other based on their location information. Fig. 22 is an explanatory diagram showing new partitioned regions created by the superimposition of the 2GHz band/1.7GHz band Voronoi region and the 800MHz band Voronoi region.

As shown in Fig. 22, a part where the 2GHz band/1.7GHz band Voronoi region and the 800MHz band Voronoi region overlap indicates a new partitioned region, and the population distribution region creation unit 535 creates new partitioned regions A to F. The population distribution region creation unit 535 creates the new partitioned region management table based on the created new partitioned regions A to F. Specifically, the population distribution region creation unit 535 assigns unique identifiers to the new partitioned regions in a part where the Voronoi regions of the respective frequencies overlap, calculates the area of the new partitioned regions, and further calculates the area ratio to each of the 2GHz band/1.7GHz band Voronoi region and the 800MHz band Voronoi region. The calculated area ratios, each sector identifier, and polygon data are associated with the identifiers of the new partitioned regions, thereby creating the new partitioned region management table.

The population distribution region saving unit 536 is a part that stores the new partitioned region management table created by the population distribution region creation unit 535 in the above manner.

The new partitioned region management table created in the management server 503b described above is used to create population information of new partitioned regions. This prevents the occurrence of population distribution non-uniformity depending on the frequency to be used.

Hereinafter, the management server 504b that calculates population information using the new partitioned region management table created in the above manner is described. The management server 504b includes a sector population information accumulation unit 541 (population information storage means), a population distribution calculation unit 542 (population information calculation means), a population distribution mesh creation unit 543 (partition means), a mesh region population calculation unit 545, and a population distribution mesh saving unit 546.

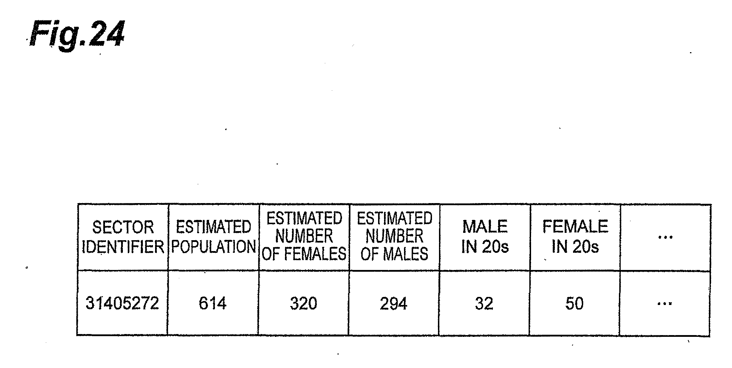

The sector population information accumulation unit 541 is a part that stores population information indicating the population in each sector, and the population information stored therein is estimated population information. The estimated population information is obtained by aggregating the location information periodically output from the RNC 200 that controls the mobile equipment 100 or the number of various signals (the number of location registration signals etc.), and, when each mobile equipment 100 under control of the RNC 200 moves across the sector and performs location registration, for example, the RNC 200 transmits the sector information of the sector where each mobile equipment 100 is located to the management server 503b, thereby obtaining the value of the estimated population information. The sector population information accumulation unit 541 stores a population information management table shown in Fig. 24, for example. In the population information management table shown in Fig. 24, the sector identifier and the estimated population are stored in association, and, the population at a specified frequency in the sector region indicated by the sector identifier is stored in association. Fig. 24 shows that information of the sector identifier "31405272" and the estimated population 614 persons are stored in association with each other.

The population distribution calculation unit 542 is a part that calculates a population distribution in new partitioned regions and, to be more specific, a part that calculates a population distribution in each region based on the new partitioned region management table stored in the population distribution region saving unit 536 and the population information management table stored in the sector population information accumulation unit 541 and creates a regional population information management table containing the calculated population distribution.

Specifically, the population distribution calculation unit 542 extracts the population information management table from the sector population information accumulation unit 541, extracts the new partitioned region management table from the population distribution region saving unit 536, and then performs combining processing using the sector identifier of each management tables as a key. Then, the population distribution calculation unit 542 calculates the population in a new partitioned region according to the estimated population in the sector region indicated by the sector identifier associated based on the combining processing and the area ratio of the new partitioned region to the Voronoi region associated with the sector identifier, and thereby creates the regional population information management table. Note that, although the ranges of the sector region and the Voronoi region are different, the Voronoi region corresponding to the sector identifier is treated as the sector region for easier calculation of population statistical information.

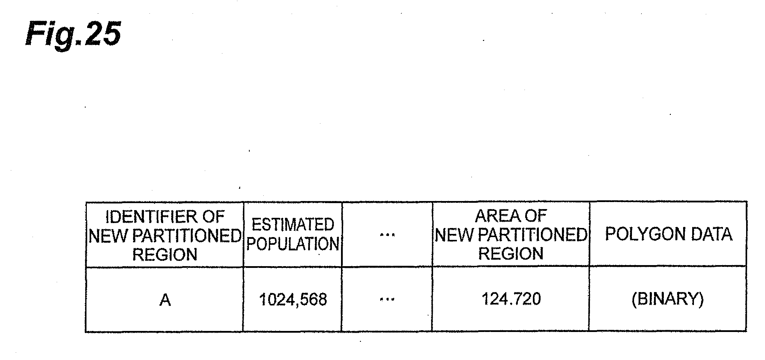

A specific example of the regional population information management table is described hereinbelow. Fig. 25 is an explanatory diagram showing a specific example of the regional population information management table. As shown in Fig. 25, the regional population information management table stores the identifier of a new partitioned region, the estimated population, the area of the new partitioned region, and polygon data in association with one another. Note that the attribute distribution of the new partitioned region is also stored according to its area ratio.

A method of calculating the estimated population in the regional population information management table is described hereinafter in detail. Assume that, in the population information management table, the estimated population value of the 2GHz band sector, the estimated population value of the 1.7GHz band sector, and the estimated population value of the 800MHz band sector corresponding to the new partitioned region identifier A are X, Y and Z, respectively. In this case, the estimated population value of the new partitioned region indicated by the identifier A is calculated by $(X+Y)\times$area ratio+z$\times$area ratio. Note that the area ratio is calculated by new partitioned region/Voronoi region (corresponding to sector identifier).

The configuration of the management server 504b is further described. The population distribution mesh creation unit 543 is a part that partitions a given region including the new partitioned regions by using a predetermined rectangular mesh region. The population distribution mesh creation unit 543 calculates the area of a partial new partitioned region included in a mesh region or the area ratio of the new partitioned region to the partial new partitioned region in the mesh region. Then, the population distribution mesh creation unit 543 can calculate population information of the mesh region based on the population information of the new partitioned region and its area ratio.

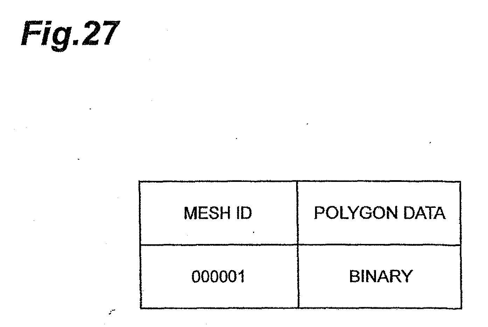

Note that the mesh region is stored in the mesh region population calculation unit 545, and the mesh region is specified by storing a mesh management table that stores a mesh ID and polygon data in association with each other as shown in Fig. 27, for example. Further, in the polygon data, binary data and its location information are contained. This is described in further detail below.

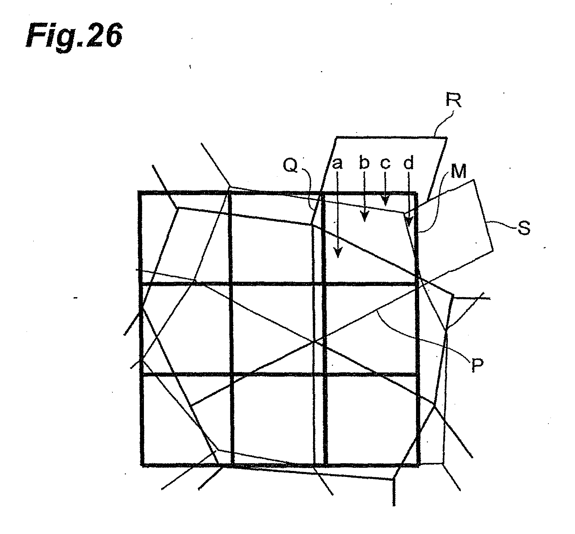

Fig. 26 shows a schematic diagram where a new partitioned region is partitioned using a given mesh region. In Fig. 26, the mesh region M includes regions a to d. The regions a to d are sub-regions included in new partitioned regions P to S. The population distribution mesh creation unit 543 performs superimposition of the polygon data stored in the mesh management table and the polygon data in the regional population information management table according to their stored location information and thereby calculates the areas of the regions a to d as follows, and stores them as an intermediate processing table. The intermediate processing table stores a mesh ID, the areas of new partitioned regions in the mesh region, and its polygon data (binary data, location information etc.), in addition to the identifiers of the new partitioned regions, the estimated population, and the areas of the new partitioned regions, in association with one another.

The specific description is as follows. Assuming that the area of the region a is a1, the area of the region b is b1, the area of the region c is c1, the area of the region d is d1, the area of the new partitioned region P is P1, the population is p, the area of the new partitioned region Q is Q1, the population is q, the area of the new partitioned region R is R1, the population is r, and the area of the new partitioned region S is S1, the population is s, the population m in the mesh region M can be represented as the following equation (1).

$$\text{The population } m \text{ of the mesh region } M$$
$$= p \times (a1/P1) + q \times (b1/Q1) + r \times (c1/R1) + s \times (d1/S1) \dots (1)$$

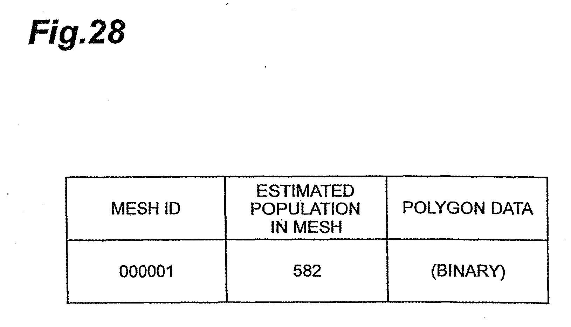

The population m of the mesh region M calculated in this manner is contained in the population distribution mesh management table and stored into the population distribution mesh saving unit 546. A specific example of the population distribution mesh management table is described with reference to Fig. 28. As shown in Fig. 28, the population distribution mesh management table stores a mesh ID, the estimated population in a mesh, and polygon data (binary data and location information) in association with one another.

Hereinafter, the process of the management server 503b having the above-described configuration is described. Fig. 23 is a flowchart showing an operation of the management server 503b. First, the sector information extraction unit 534 extracts record information of the 800MHz band sector from the sector information management table of the sector information accumulation unit 533 (S301). Then, the population distribution region creation unit 535 creates the 800MHz band Voronoi region management table based on the extracted center coordinates of the 800MHz band sector (S302). In this Voronoi region management table, the 800MHz band sector identifier, polygon data of the Voronoi region and the area are stored.

On the other hand, the sector information extraction unit 534 extracts record information of the 2GHz band/ 1.7GHz band sector from the sector information management table of the sector information accumulation unit 533 (S303). Then, the overlay information extraction unit 532 extracts the overlay information management table of the overlay information accumulation unit 531 according to the extracted record information (S304). Then, the population distribution region creation unit 535 creates the intermediate processing table in which the 2GHz band sector identifier, the 1.7GHz band sector identifier and the 2GHz band sector center coordinates are associated with one another (S305).

According to the center coordinates of the 2GHz band sector of the created intermediate processing table, the population distribution region creation unit 535 creates the 2GHz band/1.7GHz band Voronoi region management table (S306). Then, according to the 2GHz band/1.7GHz band Voronoi region management table and the 800MHz band Voronoi region management table, the population distribution region creation unit 535 superimposes the 2GHz band/ 1.7GHz band Voronoi region and the 800MHz band Voronoi region on top of each other and thereby creates the new partitioned region management table for the new partitioned region (S307). In other words, the new partitioned region management table containing information for calculating population information of the new partitioned region such as the area ratio of the new partitioned region to the 2GHz band/1.7GHz band Voronoi region and the area ratio of the new partitioned region to the 800MHz band Voronoi region, is created. The created new partitioned region management table is stored into the population distribution region saving unit 536 (S308).

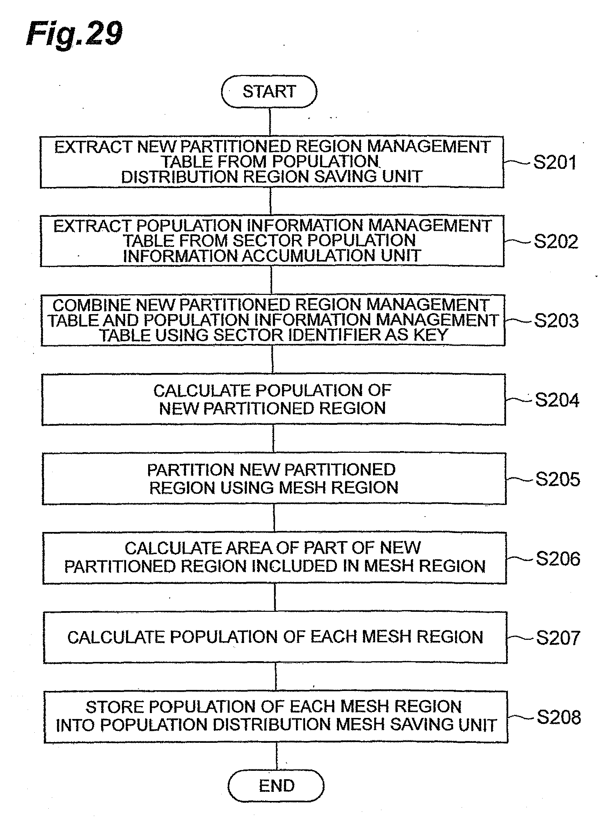

Further, a process of the management server 504b that calculates the population in the mesh region by using the new partitioned region management table created using the management server 503b is described hereinbelow. Fig. 29 is a flowchart showing an operation of the management server 504b. The population distribution calculation unit 542 extracts the new partitioned region management table from the population distribution region saving unit 536 (S401). Next, the population distribution calculation unit 542 extracts the population information management table from the sector population information accumulation unit 541 (S402).

Then, the population distribution calculation unit 542 performs combining processing using the sector identifier contained in each of the extracted new partitioned region management table and population information management table as a key (S403). The population distribution calculation unit 542 calculates the population in the new partitioned region according to the estimated population in the sector region indicated by the sector identifier obtained by the combining processing and the area ratio of the new partitioned region to the Voronoi region corresponding to the sector identifier (S404).

After that, the population distribution mesh creation unit 543 partitions the new partitioned region based on the mesh region (S405). Then, the mesh region population calculation unit 545 calculates the area of the new partitioned region included in the mesh region (S406). Then, the population of the mesh region is calculated based on the area ratio of a partial new partitioned region included in the mesh region to the whole new partitioned region (S407). The calculated population information is stored into the population distribution mesh saving unit 546 (S408).

Hereinafter, operation and effect of the management server 503b and the management server 504b having the above-described configurations are described. In the management server 503b of this embodiment, the sector information accumulation unit 533 previously stores a sector identifier indicating a sector, frequency information indicating either one of a first frequency (e.g. 800MHz band) or a second frequency (e.g. 2GHz band or 1.7GHz band) used in the sector, and location information (sector center latitude and sector center longitude) indicating the center position of the sector. Further, in the management server 504b, the sector population information accumulation unit 541 previously stores a sector identifier indicating a sector and population information indicating the population in the sector in association with each other. Then, in the management server 503b, the population distribution region creation unit 535 performs Voronoi partition on the basis of the prestored sector location information at each frequency and thereby creates the 800MHz band Voronoi region and the 2GHz band/1.7GHz band Voronoi region.

Then, the population distribution region creation unit 535 creates a new partitioned region in which the 800MHz band Voronoi region and the 2GHz band/1.7GHz band Voronoi region overlap. The new partitioned region is saved into the population distribution region saving unit 536. Then, the population distribution calculation unit 542 calculates population information of the new partitioned region based on the area ratio of the stored new partitioned region to the 800MHz band Voronoi region, the area ratio of the new partitioned region to the 22GHz band/1.7GHz band Voronoi region, the population information of the 800MHz band sector stored in the sector population information accumulation unit 541, which is the population information of the 800MHz band Voronoi region, and the population information of the 2GHz band/1.7GHz band Voronoi region obtained by adding up the population information of the 2GHz band sector and the population information of the 1.7GHz band sector stored in the sector population information accumulation unit 541.

This enables accurate calculation of the population distribution in a given region without non-uniformity. Specifically, although an overlap range exists depending on the frequency coverage area, and non-uniformity commonly occurs when calculating the population distribution, according to the present invention, a part where Voronoi regions overlap is set as new partitioned regions, and the population information is calculated for each new partitioned region, so that the population distribution non-uniformity is less likely to occur.

Further, in the management server 503b, the overlay information accumulation unit 531 stores the correspondence showing the overlay relationship between the 2GHz band (corresponding to the second frequency) and the 1.7GHz band (corresponding to the third frequency)

The population distribution region creation unit 535 creates a Voronoi region on the basis of the center position of the sector with the frequency of 2GHz band corresponding to the 1.7GHz band, without creating a Voronoi region on the basis of the center position of the sector with the frequency of 1.7GHz band, based on the correspondence stored in the overlay information accumulation unit 531. The created "Voronoi region is stored into the population distribution region saving unit 536.

Then, the population distribution calculation unit 542 can calculate the population information of the new partitioned region according to the Voronoi region stored in the population distribution region saving unit 536 and the estimated population thereof. Specifically, because the 1.7GHz band/2GHz band Voronoi region includes the population of the 1.7GHz band sector and the population of the 20Hz band sector, the population distribution calculation unit 542 can calculate the population information of the new partitioned region using the sum of the population of the both frequencies and their area ratio. It is thereby possible to eliminate the population distribution non-uniformity due to the overlay relationship.

Further, according to the management server 503b and the management server 504b, a given region including the new partitioned regions created by the population distribution region creation unit 535 is partitioned by a given mesh region, and the population information of the partitioned mesh region is calculated based on the area ratio of the new partitioned regions included in the mesh region M. For example, in Fig. 26, the regions a to d are included in the mesh region M. The regions a to d are a part of the new partitioned regions P to S. Thus, the population information of the mesh region M can be calculated by calculating the respective population information of the regions a to d based on the population information of the new partitioned regions P to S and the area ratio of the regions a to d to the new partitioned regions P to S and adding up the respective population information. The population distribution can be thereby calculated for each mesh region.

[Third embodiment]

Hereinafter, a management server for creating a basic table capable of processing every statistical information is described. A management server 503c is a server for executing one function of the mobile demography unit 503 in the communication system shown in Fig. 1. Note that this management server has the same technical feature as the management server of the first embodiment and the management server of the second embodiment in the point of performing statistical processing based on the rough location or the detailed place of the mobile equipment.

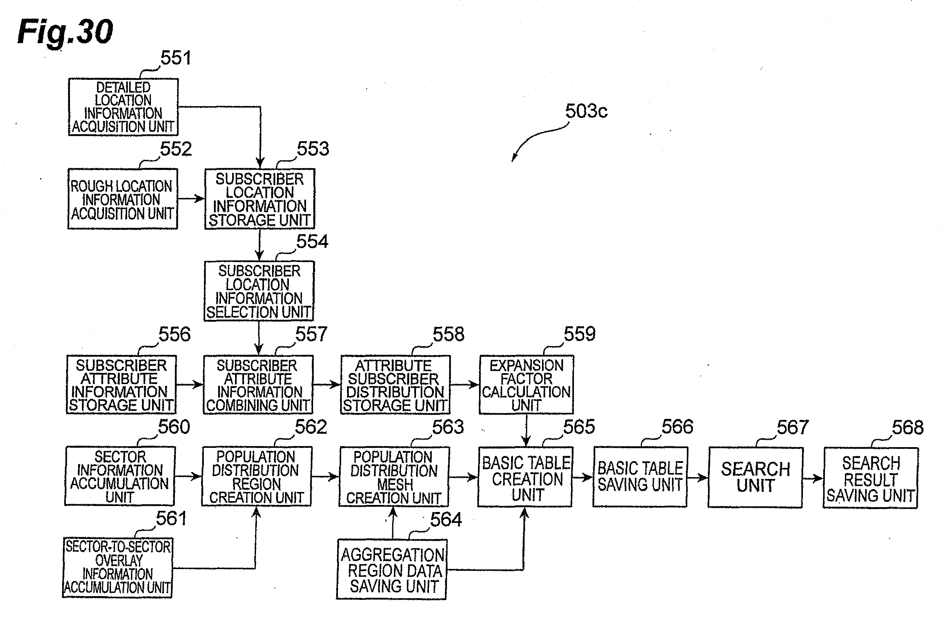

Fig. 30 is a block diagram showing functions of the management server 503c. As shown in Fig. 30, the management server 503c includes a detailed location information acquisition unit 551 (acquisition means), a rough location information acquisition unit 552 (acquisition means), a subscriber location information storage unit 553, a subscriber location information selection unit 554, a subscriber attribute information storage unit 556, a subscriber attribute information combining unit 557, an attribute subscriber distribution storage unit 558 (location information storage means), an expansion factor calculation unit 559 (expansion factor calculation means, expansion factor storage means), a sector information accumulation unit 560, a sector-to-sector overlay information accumulation unit 561, a population distribution region creation unit 562, a population distribution mesh creation unit 563 (area ratio calculation means), an aggregation region data saving unit 564 (aggregation region storage means), a basic table creation unit 565 (basic table creation means), a basic table saving unit 566 (basic table storage means), a search unit 567 (calculation means), and a search result saving unit 568. Each element is described hereinbelow.

The detailed location information acquisition unit 551 is a part that acquires coordinate information acquired by the GPS or the like in a mobile equipment. A mobile equipment acquires coordinate information as the location information by the GPS at regular intervals and transmits the coordinate information to the management server 503c, so that the detailed location information acquisition unit 551 can acquire the location information (coordinate information) of each mobile equipment. Note that the location information may be acquired at irregular intervals, not limited to at regular intervals.

Fig. 31 illustrates information acquired by the detailed location information acquisition unit 551. As shown in Fig. 31, the detailed location information acquisition unit 551 acquires a user identifier for identifying a user of a mobile equipment, time when a location is measured, a location data type, and a latitude and a longitude from the mobile equipment. Those acquired information are stored into a detailed location information management table in the detailed location information acquisition unit 551 (cf. Fig. 31).

The rough location information acquisition unit 552 is a part that acquires SAI (or sector identifier) indicating a sector where a mobile equipment is located, and rough location information indicating a rough location in the sector. The location in the sector can be measured by performing so-called PRACH PD positioning calculation in the RNC 300 after location registration processing or the like by the mobile equipment. According to the processing by PRACH PD, the rough location information is generated and output from the switching equipment 400 on a regular basis. The rough location information is output by the processing shown in Fig. 3, for example.

Fig. 32 illustrates information acquired by the rough location information acquisition unit 552. As shown in Fig. 32, the rough location information acquisition unit 552 acquires a user identifier for identifying a user of a mobile equipment, time when a location is measured, a location data type, SAI (sector identifier) and a latitude and a longitude from the mobile equipment. Note that there is also a case where only SAI is acquired as the location information without acquiring latitude and longitude information. Those acquired information are stored into a rough location information management table in the rough location information acquisition unit 552 (cf. Fig. 32).

The subscriber location information storage unit 553 is a part that stores subscriber location information, which is the coordinate information acquired by the detailed location information acquisition unit 551 and the rough location information acquired by the rough location information acquisition unit 552. In this example, at least coordinate information or sector information, identification information identifying a mobile equipment, and location measurement time are stored in association.

Fig. 33 illustrates multi-location information management table stored in the subscriber location information storage unit 553. As shown in Fig. 33, the subscriber location information storage unit 553 stores a management table in which the records of the management tables shown in Fig. 31 and Fig. 32 are combined.

The subscriber location information selection unit 554 is a part that selects which of the detailed location information and the rough location information stored in the subscriber location information storage unit 553 is to be contained into a basic table for statistical processing. For example, the subscriber location information selection unit 554 selects the rough location information or the detailed location information acquired at time t when an instruction to create the basic table is given. Note that, when both of the rough location information and the detailed location information are acquired at the same time, the detailed location information considered to be accurate is selected.

Another selection method is as follows. Specifically, when the acquisition period t1 of the detailed location information is shorter than the acquisition period t2 of the rough location information, the subscriber location information selection unit 554 selects the detailed location information. Further, when the acquisition period t1 of the detailed location information is longer than the acquisition period t2 of the rough location information, the subscriber location information selection unit 554 selects the information acquired closest to the timing of using the location information as the location information. In other words, the detailed location information or the rough location information which is acquired closest to the reference time t when the basic table is created is selected as the location information. For example, when "acquisition time t3 of detailed location information - time t" > "acquisition time t4 of rough location information - time t", the rough location information is selected as the location information. When "acquisition time t3 of detailed location information - time t" ≤ "acquisition time t4 of rough location information - time t", the detailed location information is selected as the location information corresponding to the time t.

Further, the subscriber location information selection unit 554 may interpolate the location information where a user has been possibly located at time t5 (interpolation processing). Using the detailed location information or the rough location information acquired at the time close to the time t5, a user location at the time t5 is estimated. Note that the user location is estimated by the latitude and longitude. To be specific, when the location information acquired at time t5-1 is (x=0,y=0) and the location information acquired at time t5+1 is (x=2,y=2), the location information at time t5 can be linearly interpolated as (x=1,y=1) as one method. As another method, a map marching method used in a car navigation system or the like can be used.

The subscriber location information selection unit 554 is able to perform any of the above-described selection methods. Note that the subscriber location information selection unit 554 may select location information by designating a specific date and time period.

The subscriber attribute information storage unit 556 is a part that stores subscriber attribute information indicating the attribute of subscriber information in association with the identifier of a user, which is a subscriber, and stores the age (or the age category), gender, address code and the like of a user of a mobile equipment, which is a subscriber.

The subscriber attribute information combining unit 557 is a part that combines the location information (detailed location information or rough location information) selected by the subscriber location information selection unit 554 and the subscriber attribute information stored in the subscriber attribute information storage unit 556 and thereby generates distribution information.

The attribute subscriber distribution storage unit 558 is a part that stores the multi-location information management table that combines attribute information generated by the subscriber attribute information combining unit 557. Fig. 34 is a view showing a specific example of the multi-location information management table combining the attribute information, and it shows distribution information of subscribers. As shown in Fig. 34, the attribute subscriber distribution storage unit 558 stores attribute information (gender, age, address code) and subscriber location information (time, location data type, SAI (sector identifier), latitude and longitude) in association for each user identifier.

The expansion factor calculation unit 559 is a part that calculates an expansion factor of for each attribute based on the distribution information stored in the attribute subscriber distribution storage unit 558 and other statistical data (e.g. statistical data collected by a census). To be more specific, the expansion factor calculation unit 559 calculates the population for each attribute from the distribution information in the attribute subscriber distribution storage unit 558 and derives the national population for each attribute from other statistical data stored in a storage unit, which is not shown. Then, the national population obtained from other statistical data is divided by the population calculated from the distribution information, thereby calculating the expansion factor. For example, the population A of males in twenties is derived from other statistical data, and the population B of males in twenties is derived from the distribution information in the same manner. Then, the population A/the population B is calculated, so that the expansion factor is obtained. Although the expansion factor is calculated for each age and gender in this embodiment, it is not limited thereto, and the expansion factor for an attribute with a predefined width such as the age category may be calculated, or the expansion factor may be calculated based on the area such as the address code.

Then, the expansion factor calculation unit 559 generates data in which the calculated expansion factor is associated with each user. Fig. 36 is a diagram showing an expansion factor management table in which the expansion factor calculated by the expansion factor calculation unit 559 is assigned to each user. As shown in Fig. 36, the expansion factor calculation unit 559 stores the expansion factor management table in which user identifier, gender, age, address code, time, location data type, SAI, latitude, longitude, and expansion factor are associated with one another.

The sector information accumulation unit 560 is a part that stores a sector information management table containing information related to each sector defined on the basis of the base station. The sector information management table is the same as the one described in the second embodiment (cf. Fig. 16), and it contains a sector identifier indicating a sector, a sector frequency type, a sector center latitude, a sector center longitude, a base station name, a base station latitude, and a base station longitude in association with one another. The sector frequency type indicates which of a first frequency band (800MHz band) and a second frequency band (1.7GHz band and 2GHz band) the type of a frequency band used in the sector is. Further, the sector center latitude and the sector center longitude are information indicating the center position of the sector. Furthermore, the sector information management table contains the base station name, the base station latitude and the base station longitude, which are location information of the base station, in association with each other.

The sector-to-sector overlay information accumulation unit 561 is a part that stores an overlay management information table indicating an overlay relationship between sectors (cf. Fig. 15). The overlay management information table stores sector identifiers assigned to the frequency bands used in each sector, and stores a 2GHz band sector identifier and a 1.7GHz band sector identifier in association with each other. Specifically, the overlay management information table shows that a terminal using the frequency of 2GHz band and a terminal using the frequency of 1.7GHz band can be used in the same area of influence. Note that the overlay management information table is previously defined and specified by a carrier or the like.

The population distribution region creation unit 562 extracts record information of the 800MHz band sector stored in the sector information accumulation unit 560 and estimates the sector area of influence for the 800MHz band. The sector area of influence is estimated by a method of partition into Voronoi regions on the basis of the sector center position or a method using a wave propagation model. Note that estimating the area of influence means defining the area of influence using polygon data or the like. Further, the population distribution region creation unit 562 extracts record information of the 2GHz band sector stored in the sector information accumulation unit 560, acquires the overlay management information table from the sector-to-sector overlay information accumulation unit 561, and estimates the sector area of influence of the 2GHz band/1.7GHz band sector.

The population distribution mesh creation unit 563 is a part that calculates the area ratio of the sector area of influence of the 800MHz band sector (cf. e.g. Fig. 19) to the aggregation region and the area ratio of the sector area of influence of the 2GHz band/1.7GHz sector (cf. e.g. Fig. 18) to the aggregation region according to the aggregation region data stored in the aggregation region data saving unit 564, and stores the area ratios in association with each aggregation region. Note that, in this example, an overlap part of the sector area of influence and the aggregation region is an overlap region, and the area ratio of the overlap region to the sector area of influence is calculated.

Fig. 35 is an explanatory diagram showing an area ratio management table, which is management information generated by the population distribution mesh creation unit 563. As shown in Fig. 35, the area ratio management table created by the population distribution mesh creation unit 563 associates SAI (or sector identifier), an aggregation region identifier, an area ratio (the area of overlap region/the area of sector area of influence), and a frequency band in association with one another, and the population distribution mesh creation unit 563 stores the area ratio management table. Note that the aggregation region identifiers are the same between the frequency bands of 2GHz and 800MHz because the sector region of 2GHz and the sector region of 800MHz are assumed to be the same for the sake of convenience. As a matter of course, the identifiers are different in some cases. Further, the area ratios shown therein are rough values.

The sector region specified by the SAI, the aggregation region and the area ratio are described hereinafter. Fig. 42 is a conceptual diagram showing partition of a sector region by a mesh region, which is an aggregation region. As shown in Fig. 42, aggregation regions a to n, which are the mesh region, are defined in the aggregation region data saving unit 564, and the sector regions A and C are divided by the aggregation regions a to n. The aggregation regions included in the sector region A are overlap regions $a_1$, $b_1$, $c_1$, $e_1$, $f_1$, $g_1$, $j_1$, $k_1$, and the aggregation regions included in the sector region C are overlap regions $d_1$, $g_2$, $h_1$, $i_1$, $l_1$, $m_1$, $n_1$. The overlap region $a_1$, for example, is a part of the aggregation region a, which is a region in which the sector region A and the aggregation region a overlap. This is the same for the other aggregation regions. Then, each area ratio in Fig. 35 is calculated by the overlap region/the sector region, and it is calculated by the overlap region $a_1$/the sector region A, for example.

The aggregation region data saving unit 564 is a part that stores information defining aggregation regions, and, for example, stores prefectural region data that defines prefectures, municipal region data that defines cities and towns, and block region data that defines block numbers. Further, as mesh region data indicating a rectangular region having a predetermined size, primary mesh region data with a side of 80 km, secondary mesh region data with a side of 10 km, tertiary region data with a side of 1 km, and 1/2 area mesh region data with a side of 500 m may be stored.

The basic table creation unit 565 creates an intermediate table of a rough location information part of the expansion factor management table by combining records of the area ratio management table (Fig. 35) stored in the population distribution mesh creation unit 563 and records related to the rough location of the expansion factor management table (Fig. 36) stored in the expansion factor calculation unit 559 by using the SAI (or sector identifier) as a key. Fig. 37 is an explanatory diagram showing the intermediate table created by converting the rough location information part of the expansion factor management table of by the basic table creation unit 565. As shown in Fig. 37, in the intermediate table, user identifier, gender, age, address code, time, location data type, SAI (or sector identifier), aggregation region identifier, area ratio, and expansion factor are associated with one another. Further, in the intermediate table, the same parameters are stored in association with each aggregation region identifier, and the user identifier, gender, age, address code, time, location data type, SAI (or sector identifier), area ratio, and expansion factor are stored. Note that, although the intermediate table is created using the SAI in the above-described example, it is not limited thereto, and when the latitude and longitude are stored, as rough location information, in association with the SAI, the intermediate table may be created by determining in which aggregation region it is included using the latitude and longitude.

Further, the basic table creation unit 565 creates an intermediate table, which is new management information, by combining records of the area ratio management table (Fig. 35) stored in the population distribution mesh creation unit 563 and records related to the detailed location of the expansion factor management table (Fig. 36) stored in the expansion factor calculation unit 559 by associating the location information (latitude and longitude) of the expansion factor management table (Fig. 36) and the aggregation region of the area ratio management table (Fig. 35). Specifically, for a record in which coordinate information (latitude and longitude) is stored as location data in the expansion factor management table, it is determined in which aggregation region the coordinate information is included, thereby creating the intermediate table.

Fig. 38 is an explanatory diagram showing the intermediate table created by converting a detailed location information part of the expansion factor management table by the basic table creation unit 565. As shown in Fig. 38, in the intermediate table, user identifier, gender, age, address code, time, location data type, aggregation region identifier, area ratio, and expansion factor are associated with one another. Note that, in the information of Fig. 38 using the detailed location information, SAI (or sector identifier) is not actually used and left blank, and the area ratio is set to 1.

Then, the basic table creation unit 565 creates a basic table on the basis of the intermediate tables shown in Figs. 37 and 38. Fig. 39 is an explanatory diagram showing the basic table created by the basic table creation unit 565. In the basic table, for each aggregation region identifier, location measurement time, population contribution rate to aggregation region, gender, age, address code, user identifier, and location data type are associated with one another. The population contribution rate is a value obtained by multiplying the area ratio by the expansion factor, which indicates the degree of contribution to the population in the aggregation region.

The basic table saving unit 566 is a part that stores the basic table created by the basic table creation unit 565.

The search unit 567 is a part that performs search processing and aggregation processing using the basic table stored in the basic table saving unit 566, and it performs search and aggregation based on items input by an operator. For example, when calculating the population of a given aggregation region, the search unit 567 extracts and adds up the population contribution rates associated with each aggregation region, thereby calculating the population of the entire aggregation region. Further, the search unit 567 can calculate the population of a larger unit of aggregation region (e.g. in units of country or district) by calculating the population of the entire aggregation region for every aggregation region and adds them up.

The search result saving unit 568 is a part that stores a search result searched by the search unit 567.

A specific example of the search processing and aggregation processing performed by the search unit 567 is described hereinafter. As described above, the search unit 567 can perform the following search and aggregation according to the basic table created by the basic table creation unit 565.

- Time-based national population distribution

The search unit 567 can aggregate the population in each aggregation region with the same date and time in the basic table and thereby calculate the population throughout Japan. Specifically, the search unit 567 extracts aggregation regions and population contribution rates at the pre-specified date and time based on the date and time in the basic table. Then, the search unit 567 adds up the extracted population contribution rates for each aggregation region, thereby calculating the population in each aggregation region at the specified date and time. Further, the search unit 567 adds up the population in the respective aggregation regions, thereby calculating the population of the entire aggregation regions. When the aggregation regions are allocated to every part of Japan, the population throughout Japan can be calculated at each day and time. It is thereby possible to calculate the population actually present in Japan in consideration of persons who have moved abroad for overseas travel and the like.

- Time-based national attribute population distribution

The search unit 567 can aggregate the population for each attribute with the same date and time in the basic table. Specifically, the search unit 567 extracts population contribution rates and attribute information (age and gender) at the pre-specified date and time based on the date and time in the basic table. Then, the search unit 567 adds up the extracted population contribution rates for each attribute information, thereby calculating the population corresponding to the specified attribute information across the country at the specified date and time. Note that, although specific ages are contained in the basic table, when performing this processing, the ages may be replaced by age categories, so that the attribute has a width such as males in their twenties. For example, when calculating the population with the attribute of males in their twenties, the target date and time are specified, attribute information and population contribution rates are extracted based on the specified date and time, and the population contribution rates are added and aggregated for each extracted attribute, thereby calculating the population of the attribute at the specified date and time.

- Time-based national attribute ratio distribution

The search unit 567 can aggregate the population for each attribute with each date and time in the basic table and calculate the attribute ratio. Specifically, the search unit 567 extracts population contribution rates and attribute information (age and gender) at the pre-specified date and time based on the date and time in the basic table. Then, the search unit 567 adds up the extracted population contribution rates for each attribute information, thereby calculating the population corresponding to the specified attribute information across the country at the specified date and time. Further, the search unit 567 calculates the national population at the specified date and time by adding up the population contribution rates in the same manner. Then, the population for each attribute information is divided by the national population, thereby calculating the attribute ratio.

- Time-based population distribution in given aggregation region

The search unit 567 can aggregate the population in a specified aggregation region with each date and time in the basic table and thereby calculate the population in the specified aggregation region. For example, when the aggregation region identifier indicating the aggregation region a is specified by an operator, the search unit 567 adds and aggregates the population contribution rates associated with the aggregation region a, thereby calculating the population in the aggregation region a.

- Time-based attribute population distribution in given aggregation region

The attribute and aggregation region to serve as the target of aggregation are specified by an operator, and the search unit 567 aggregates population contribution rates in each aggregation region for each attribute with respect to each date and time. Then, the search unit 567 adds up the population contribution rates in each aggregation region at the same date and time with respect to each attribute and thereby calculates the population. For example, when calculating the population with the attribute of males in their twenties, the population contribution rate of the males in their twenties in the aggregation region a serving as the target is extracted and added together, thereby calculating the population of the specified attribute in the aggregation region a.

- Time-based attribute ratio in given aggregation region

The attribute and aggregation region are specified by an operator, and the search unit 567 aggregates population contribution rates in the specified aggregation region for the specified attribute with respect to each date and time. Then, the search unit 567 adds up the population contribution rates in each aggregation region for the same attribute at the same date and time and thereby calculates the population contribution rate for each attribute across the country. Then, the search unit 567 calculates the attribute ratio to the national population at the same date and time. For example, when the attribute specified by the operator is males in their twenties, the population of the attribute in each aggregation region is calculated and added up, thereby calculating the national population. Then, the population of the attribute across the country is calculated, and the attribute ratio to the national population can be calculated using them.

- Time-based average population distribution

The search unit 567 calculates the average population distribution per day in a specified aggregation region. Specifically, the search unit 567 aggregates the population contribution rates at the specified time in the aggregation region specified by an operator. The period of aggregation is a period specified by an operator. Then, the population aggregated in this period is divided by the period, thereby calculating the population per day. The average population distribution at given time in a given aggregation region can be thereby calculated.

- Time-based average attribute population distribution

The search unit 567 accepts the aggregation region, time, attribute and aggregation period to serve as the target of aggregation by an operator. Then, the search unit 567 aggregates the population contribution rates in the aggregation region for each attribute during the aggregation period and thereby calculates the population. The search unit 567 then adds up the population for each attribute during the aggregation period and divides the population by the period, thereby calculating the population distribution per day.

- Time-based average attribute ratio

The search unit 567 accepts the aggregation region, time, attribute and aggregation period to serve as the target of aggregation by an operator. Then, the search unit 567 aggregates the population at the same time in each aggregation region for each attribute during the aggregation period and divides the aggregated population by the aggregation period, thereby calculating the population per day (average population) at the same time in each aggregation region for each attribute. The search unit 567 then divides the calculated average population for each attribute by the national average population, thereby calculating the average attribute ratio. Although the average population is divided by the national average population in this example, it may be divided by the population in an aggregation region to thereby calculate the average attribute ratio in the aggregation region.

The above is examples of statistical processing, and various statistical processing and aggregation processing may be performed. Further, although gender and age are illustrated as examples in this embodiment, other information may be used. For example, information such as preference and personality may be used.

Hereinafter, a process of the management server 503c having the above-described configuration is described. First, a method of creating aggregation region management data created by the population distribution mesh creation unit 563 is described. Fig. 40 is a flowchart showing a process of creating aggregation region management data in the population distribution mesh creation unit 563.

First, the population distribution region creation unit 562 extracts record information of the 800MHz band sector from the sector information accumulation unit 560 (S501), and estimates the sector area of influence of the 800MHz band based on the record information (S502).

Further, the population distribution region creation unit 562 extracts record information of the 2GHz band sector from the sector information accumulation unit 560 (S503). Then, the population distribution region creation unit 562 acquires the overlay information management table from the sector-to-sector overlay information accumulation unit 561 (S504). The sector area of influence of the 2GHz band/1.7GHz band is estimated based on the acquired overlay information management table (S505).

The population distribution mesh creation unit 563 extracts the aggregation region data (e.g. mesh region) from the aggregation region data saving unit 564 and calculates the area ratio of the overlap region of the extracted aggregation region to the estimated sector area of influence of the 800MHz band and to the estimated sector area of influence of the 2GHz band/1.7GHz band (S506). Then, the area ratio of each overlap region in the aggregation region calculated by the population distribution mesh creation unit 563 is stored into the population distribution mesh creation unit 563 (S507).

Hereinafter, a process of creating the basic table for performing search and statistical processing and a process of search and statistical processing using the basic table in the management server 503c are described. Fig. 41 is a flowchart showing a process of creating a basic table and a process of search and statistical processing using the created basic table in the management server 503c.

First, the detailed location information acquisition unit 551 and the rough location information acquisition unit 552 respectively acquire coordinate information, which is detailed location information, and sector information, which is rough location information, at regular intervals and store the information into the subscriber location information storage unit 553 (S601). The subscriber location information selection unit 554 selects and extracts either one of the detailed location information or the rough location information according to predetermined conditions (S602).

Then, the subscriber attribute information combining unit 557 obtains distribution information in which the subscriber attribute information stored in the subscriber attribute information storage unit 556 and the subscriber location information selected by the subscriber location information selection unit 554 are combined (S603). The distribution information is stored into the attribute subscriber distribution storage unit 558(S604).

Then, the expansion factor calculation unit 559 combines the distribution information stored in the attribute subscriber distribution storage unit 558 and other statistical data (census etc.) and calculates an expansion factor for converting the number of mobile equipments derived based on the location information to the population. The expansion factor is assigned to each user identifier and stored in association with the expansion factor calculation unit 559 (S605).

The basic table creation unit 565 combines the management information created by the population distribution mesh creation unit and the management information including the expansion factor stored in the expansion factor calculation unit 559, calculates the population contribution rate in the aggregation region based on the area ratio and the expansion factor in the combined management information, and creates the basic table including the population contribution rate (S606). The basic table created by the basic table creation unit 565 is stored into the basic table saving unit 566 (S607).

Then, according to operation by an operator, the search unit 567 performs extraction of information and conversion of information under given conditions in the basic table (S608). The result of processing is stored into the search result saving unit 568 (S609).

The basic table is created in the above manner, thus enabling search processing and aggregation processing using the basic table. In the basic table, items are stored in association so as to facilitate aggregation processing for each attribute or aggregation processing for each aggregation region.

Hereinafter, operation and effect of the management server 503c according to the embodiment are described. In the management server 503c in this embodiment, the detailed location information acquisition unit 551 and the rough location information acquisition unit 552 acquire identification information (user identifier) of a mobile equipment together with location information (detailed location information or rough location information, or both of them) from each of a plurality of mobile equipments 100. Then, the search unit 567 can calculate population distribution information at given time based on the acquired location information, measurement time of the location information, and the identification information of the mobile equipment. More detailed population distribution information can be thereby enabled, and provision of the detailed population distribution information enables provision of various services.

To be more specific, the basic table creation unit 565 creates the basic table for aggregation processing and search processing based on the acquired location information, and the basic table saving unit 566 stores the basic table. Then, the search unit 567 can perform various aggregation processing using the basic table stored in the basic table saving unit 566. For example, the population distribution information at the specified time can be calculated.

Further, the basic table creation unit 565 may create the basic table using the subscriber attribute information stored in the subscriber attribute information storage unit 556, and the subscriber attribute information storage unit 556 may store the basic table. Then, the search unit 567 performs aggregation processing for each attribute information based on the basic table to which the subscriber attribute information is added, thereby calculating population distribution information for each attribute information. For example, the population distribution information of males in their twenties can be calculated by aggregating the location information of the attribute of males in their twenties only.

Further, the basic table creation unit 565 creates the basic table with respect to each aggregation region based on the management information generated by the population distribution mesh creation unit 563, and the basic table saving unit 566 stores the basic table. Then, the search unit 567 aggregates the location information for each aggregation region, thereby calculating the population distribution information.

Further, specifically, prior to creating the basic table with respect to each aggregation region, the basic table creation unit 565 calculates the expansion factor, which is the ratio of the population distribution of the sector region or aggregation region to the population distribution of the corresponding sector region or aggregation region obtained by a census or the like. Then, the expansion factor calculation unit 559 assigns the expansion factor to the subscriber distribution information for each user identifier, and the basic table creation unit 565 creates the basic table using the same. Accurate population distribution information can be calculated by aggregating the expansion factors.

Note that the aggregation region may be a sector region defined based on the area of influence of a radio base station, a predetermined rectangular region, or a region such as prefectures or cities and towns.

Further, the search unit 567 may calculate the average value of a plurality of population distribution information at the same acquisition time during a predetermined period and calculate the average value as the population distribution information. More accurate population distribution information can be thereby calculated. Specifically, the search unit 567 aggregates the location information at the same time (e.g. 1 pm) during one month. It then calculates the average value per day to thereby obtain the average population distribution information, so that more accurate information can be calculated.

Note that the search unit 567 may calculate the population or calculate the ratio of the population to the total as the population distribution information.

Further, either one of the detailed location information acquisition unit 551 or the rough location information acquisition unit 552 may acquire detailed location information or rough location information or acquire both of them. In the case of acquiring the both information, when the acquisition period of the detailed location information is shorter than the acquisition period of the rough location information, the detailed location information is selected as the location information, and when the acquisition period of the detailed location information is longer than the acquisition period of the rough location information, the information acquired closest to the timing of using the location information is selected as the location information, thereby obtaining appropriate location information. In other words, the detailed location information is preferentially selected on the basis of the acquisition period, and when the condition of the acquisition period is not satisfied, the location information acquired most recently is selected, thereby obtaining more accurate location information.

Reference Signs List

10...communication system, 100...mobile equipment, 200...base transceiver station, 302...communication control unit, 400... switching equipment, 401...communication control unit, 402... conversion unit, 403...storage unit, 500...control center, 501...social sensor unit, 502...peta mining unit, 503...mobile demography unit, 503a...management server, 504...visualization solution unit, 510... acquisition unit, 511...subscriber location information storage unit, 512...subscriber attribute information storage unit, 513...subscriber attribute combining unit, 516...attribute subscriber distribution storage unit, 517... sector level attribute distribution derivation unit, 518...sector level attribute distribution storage unit, 600...subscriber profile information storage unit, 503b...management server, 504b...management server, 531...overlay information accumulation unit, 532...overlay information extraction unit, 533...sector information accumulation unit, 534...sector information extraction unit, 535...population distribution region creation unit, 536...population distribution region saving unit, 541...sector population information accumulation unit, 542...population distribution calculation unit, 543...population distribution mesh creation unit, 545...mesh region population calculation unit, 546...population distribution mesh saving unit, 551...detailed location information acquisition unit, 552...rough location information acquisition unit, 553...subscriber location information storage unit, 554...subscriber location information selection unit, 556... subscriber attribute information storage unit, 557...subscriber attribute information combining unit, 558...attribute subscriber distribution storage unit, 559...expansion factor calculation unit, 560... sector information accumulation unit, 561... sector-to-sector overlay information accumulation unit, 562...population distribution region creation unit, 563...population distribution mesh creation unit, 564...aggregation region data saving unit, 565...basic table creation unit, 566...basic table saving unit, 567···search unit, 568···search result saving unit

**Claims**

1. A management server comprising:

   a subscriber information storage means for storing subscriber information associating identification information indicating a mobile equipment and attribute information indicating an attribute of the mobile equipment;
   an acquisition means for acquiring a sector ID of a sector where a mobile equipment is located and identification information of the mobile equipment from each of a plurality of mobile equipments;
   a location information storage means for storing a location information management table associating the sector ID and the identification information of a mobile equipment acquired by the acquisition means; and
   an aggregation means for aggregating the number of mobile equipments with each attribute of mobile equipments on a sector basis indicated by the sector ID stored in the location information storage means based on the subscriber information stored in the subscriber information storage means.

2. A communication system including a plurality of RNCs that perform wireless connection control of a plurality of mobile equipments, a switching equipment that manages the RNCs, and the management server according to Claim 1, wherein
   the RNC comprises:

   an RNC acquisition means for, when establishing communication connection with one mobile equipment among the plurality of mobile equipments, acquiring a sector ID of a sector where said one mobile equipment is located; and
   an RNC transmitting means for transmitting identification information of said one mobile equipment and the sector ID of the sector where located acquired by the acquisition means to the switching equipment when establishing communication connection with said one mobile equipment,

   the switching equipment comprises:

   a receiving means for receiving the sector ID and the identification information of a mobile equipment transmitted from the transmitting means;
   a storage means for storing the sector ID and the identification information of a mobile equipment received by the receiving means; and
   a switching equipment transmitting means for transmitting the sector ID stored in the storage means to the management server in response to a request from the management server or at regular intervals, and

   the acquisition means in the management server acquires the sector ID and the identification information of a mobile equipment from the switching equipment.

3. A statistical processing method of a management server including a subscriber information storage means for storing subscriber information associating identification information indicating a mobile equipment and attribute information indicating an attribute of the mobile equipment, the method comprising:

   an acquisition step of acquiring a sector ID of a sector where a mobile equipment is located and identification information of the mobile equipment from each of a plurality of mobile equipments;
   a location information storage step of storing a location information management table associating the sector ID and the identification information of a mobile equipment acquired in the acquisition step into a location information storage means; and
   an aggregation step of aggregating the number of mobile equipments with each attribute of mobile equipments on a sector basis indicated by the sector ID stored in the location information storage means based on the subscriber information stored in the subscriber information storage means.

**4.** A management server comprising:

a sector information storage means for storing a sector identifier indicating a sector formed for each frequency, frequency information indicating one of a first frequency and a second frequency used in the sector, and location information indicating a center position of the sector;
a population information storage means for storing a sector identifier indicating a sector formed for each frequency and population information indicating a population in the sector in association with each other;
a Voronoi region creation means for creating a Voronoi region of the first frequency and a Voronoi region of the second frequency by performing Voronoi partition based on information stored in the sector information storage means;
a partitioned region creation means for creating a partitioned region where the Voronoi region of the first frequency and the Voronoi region of the second frequency created by the Voronoi region creation means overlap; and
a population information calculation means for calculating population information of a new partitioned region created by the partitioned region creation means based on an area ratio of the new partitioned region to the Voronoi region of the first frequency, an area ratio of the new partitioned region to the Voronoi region of the second frequency, population information of the Voronoi region of the first frequency calculated from the population information stored in the population information storage means, and population information of the Voronoi region of the second frequency calculated from the population information stored in the population information storage means.

**5.** The management server according to Claim 4, comprising:

a partition means for partitioning a given region including a new partitioned region created by the partitioned region creation means by a given mesh region; and
a population information calculation means for calculating population information of a mesh region partitioned by the partition means based on an area ratio of the new partitioned region included in the mesh region.

**6.** The management server according to Claim 4 or 5, wherein
the sector information storage means further stores frequency information indicating a third frequency and location information indicating a center position of a sector of the third frequency information,
the management server further includes an overlay information storage means for storing correspondence indicating an overlay relationship between the second frequency and the third frequency,
the Voronoi region creation means creates a Voronoi region based on a center position of a sector of the second frequency corresponding to the third frequency, without creating a Voronoi region based on the center position of the sector of the third frequency, according to the correspondence stored in the overlay information storage means, and
the population information calculation means calculates the population information of the Voronoi region of the first frequency and the population information of the Voronoi region of the second frequency, using population information in the sector of the first frequency as the population information of the Voronoi region of the first frequency and using population information in the sector of the second frequency and population information in the sector of the third frequency as the population information of the Voronoi region of the second frequency.

**7.** A population information calculation method of a management server including a sector information storage means for storing a sector identifier indicating a sector formed for each frequency, frequency information indicating one of a first frequency and a second frequency used in the sector, and Location information indicating a center position of the sector, and a population information storage means for storing a sector identifier indicating a sector formed for each frequency and population information indicating a population in the sector in association with each other, the method comprising:

a Voronoi region creation step of creating a Voronoi region of the first frequency and a Voronoi region of the second frequency by performing Voronoi partition based on information stored in the sector information storage means;
a partitioned region creation step of creating a partitioned region where the Voronoi region of the first frequency and the Voronoi region of the second frequency created in the Voronoi region creation step overlap; and
a population information calculation step of calculating population information of a new partitioned region created in the partitioned region creation step based on an area ratio of the new partitioned region to the Voronoi region of the first frequency, an area ratio of the new partitioned region to the Voronoi region of the second frequency, population information of the Voronoi region of the first frequency calculated from the population information stored in the population information storage means, and population information of the Voronoi region of the second frequency calculated from the population information stored in the population information storage means.

8. A management server comprising:

an acquisition means for acquiring location information and identification information of a mobile equipment from each of a plurality of mobile equipments;

a basic table storage means for storing a basic table associating the location information acquired by the acquisition means, acquisition time of the location information, and the identification information of a mobile equipment; and

a calculation means for calculating population distribution information at given time based on the basic table stored in the basic table storage means.

9. The management server according to Claim 8, wherein
the basic table storage means further stores user attribute information of a mobile equipment in association, and
the calculation means calculates population distribution information at given time for each attribute information.

10. The management server according to Claim 8 or 9, further comprising:

an aggregation region storage means for defining and storing a plurality of aggregation regions composed of given regions, wherein

the basic table storage means stores the basic table with respect to each aggregation region defined by the aggregation region storage means, and

the calculation means calculates population distribution information at given time for each aggregation region stored in the basic table storage means.

11. The management server according to Claim 10, wherein
the aggregation region storage means defines a sector region defined by a radio base station as the aggregation region.

12. The management server according to Claim 10, wherein
the aggregation region storage means defiles a rectangular region having a predetermined size as the aggregation region.

13. The management server according to Claim 10, wherein
the aggregation region storage means defines a region determined by a unit of prefectures or cities and towns as the aggregation region.

14. The management server according to any one of Claims 1 to 13, wherein
the calculation means calculates an average value of a plurality of population distribution information at the same acquisition time during a given period, and calculates the average value as the population distribution information.

15. The management server according to any one of Claims 1 to 13, wherein
the calculation means calculates a population as the population distribution information.

16. The management server according to any one of Claims 9 to 14, wherein
the calculation means calculates a population ratio of an arbitrary attribute to a total as the population distribution information.

17. The management server according to any one of Claims 8 to 16, wherein
the acquisition means acquires detailed location information being coordinate information as the location information.

18. The management server according to any one of Claims 8 to 16, wherein
the acquisition means acquires rough location information including sector information specifying a sector and location information in the sector as the location information.

19. The management server according to any one of Claims 8 to 16, wherein
the acquisition means acquires detailed location information being coordinate information and rough location information including sector information specifying a sector and location information in the sector as the location information at predetermined periods,

when an acquisition period of the detailed location information is shorter than an acquisition period of the rough location information, the acquisition means selects the detailed location information as the location information, and when an acquisition period of the detailed location information is longer than an acquisition period of the rough location information, the acquisition means selects information acquired closest to timing of using the location information as the location information.

**20.** The management server according to any one of Claims 8 to 19, comprising:

a location information storage means for storing location information acquired by the acquisition means, user attribute information, identification information of a mobile equipment, and a location information type in association with one another;

an expansion factor calculation means for aggregating the number of mobile equipments with each attribute information based on information stored in the location information storage means, and calculating an expansion factor being a ratio of the aggregated number of mobile equipments to a population of each attribute information of statistical information obtained by pre-examination for each attribute information;

an expansion factor storage means for storing the expansion factor calculated by the expansion factor calculation means in association with the location information, the attribute information, the identification information of a mobile equipment, and the location information type stored in the location information storage means;

an aggregation region storage means for defining aggregation regions;

an area ratio calculation means for calculating an area ratio of a sector region defined by a sector to an overlap region where the sector region and an aggregation region defined by the aggregation region storage means overlap for each overlap region; and

a basic table creation means for generating rough location information data by adding the area ratio calculated by the area ratio calculation means in association with each aggregation region to information with the location information type stored in the expansion factor storage means indicating rough location information, generating detailed location information data by adding information of an area ratio 1 to information with the location information type stored in the expansion factor storage means indicating detailed location information, and creating a basic table associating a population contribution rate obtained by multiplying the expansion factor by the area ratio with identification information of a mobile equipment, attribute information and aggregation regions, wherein

the basic table storage means stores the basic table created by the basic table creation means, and

the calculation means calculates population distribution information based on the population contribution rate stored in the basic table storage means.

**21.** A statistical processing method comprising:

an acquisition step of acquiring location information and identification information of a mobile equipment from each of a plurality of mobile equipments;

a basic table storage step of storing a basic table associating the location information acquired in the acquisition step, acquisition time of the location information, and the identification information of a mobile equipment into a basic table storage means; and

a calculation step of calculating population distribution information at given time based on the basic table stored in the basic table storage means.

**Fig.1**

_10_

**Fig.2**

EP 2 469 464 A1

**Fig.3**

EP 2 469 464 A1

# *Fig.4*

BTS ~200

## Fig.5

| USER IDENTIFIER | HLR No. | SAI | SERVICE TYPE | · · · | · · · |
|---|---|---|---|---|---|
| 01234567 | 123 | 123456 | A | · · · | · · · |
| 23456789 | 456 | 789012 | B | · · · | · · · |
| ⋮ | ⋮ | ⋮ | ⋮ | ⋮ | ⋮ |
| 1234123 | 7889 | 234567 | C | · · · | · · · |

EP 2 469 464 A1

# Fig.6

503a

510
ACQUISITION
UNIT

511
SUBSCRIBER LOCATION
INFORMATION
STORAGE UNIT

512
SUBSCRIBER ATTRIBUTE
INFORMATION
STORAGE UNIT

513
SUBSCRIBER ATTRIBUTE
COMBINING UNIT

514
ATTRIBUTE SUBSCRIBER
DISTRIBUTION
STORAGE UNIT

517
SECTOR LEVEL ATTRIBUTE
DISTRIBUTION
DERIVATION UNIT

518
SECTOR LEVEL
ATTRIBUTE DISTRIBUTION
STORAGE UNIT

# Fig.7

| USER IDENTIFIER | TIME STAMP | SAI |
|---|---|---|
| 01234567 | YYYY/MM/DD hh:mm:ss | XXXX |
| | | |

*Fig.8*

| USER IDENTIFIER | GENDER | AGE | ADDRESS | RATE PLAN | ... |
|---|---|---|---|---|---|
| 01234567 | MALE | 20s | TOKYO, ... | VALUE PLAN | |
| | | | | | |

EP 2 469 464 A1

# Fig.9

| USER IDENTIFIER | TIME STAMP | SAI | GENDER | AGE | ... |
|---|---|---|---|---|---|
| 01234567 | YYYY/MM/DD hh:mm:ss | XXXX | MALE | 20s | |
| | | | | | |

**Fig.10**

| SAI | ESTIMATED POPULATION | ESTIMATED NUMBER OF FEMALES | ESTIMATED NUMBER OF MALES | MALE IN 20s | FEMALE IN 20s | ... |
|---|---|---|---|---|---|---|
| XXXX | 614 | 320 | 294 | 32 | 50 | ... |
|  |  |  |  |  |  |  |

**Fig.11**

START

S201
PREDETERMINED TIME HAS ELAPSED? — NO

YES

CREATE AND STORE ATTRIBUTE COMBINATION MANAGEMENT TABLE WITH MEASUREMENT TIME WITHIN PREDETERMINED TIME — S202

MAKE USER IDENTIFIER OF CREATED ATTRIBUTE COMBINATION MANAGEMENT TABLE UNIQUE — S203

PERFORM AGGREGATION PROCESSING WITH EACH ITEM OF ATTRIBUTE COMBINATION MANAGEMENT TABLE MADE UNIQUE — S204

CREATE POPULATION INFORMATION MANAGEMENT TABLE — S205

STORE POPULATION INFORMATION MANAGEMENT TABLE — S206

END

# Fig.12

VISUALIZATION
SOLUTION
UNIT ~504

MOBILE
DEMOGRAPHY
UNIT ~503

PETA MINING
UNIT ~502

SOCIAL SENSOR UNIT ~501

500

10

SWITCHING
EQUIPMENT } 400

RNC RNC RNC RNC RNC RNC } 300

BTS BTS BTS BTS BTS BTS BTS BTS BTS BTS } 200

} 100

*Fig.13*

EP 2 469 464 A1

# Fig.14

503a(504a)

591 — CPU

596 — COMMUNICATION MODULE

592 — RAM

597 — AUXILIARY STORAGE

593 — ROM

594 — INPUT UNIT

595 — OUTPUT UNIT

# Fig.15

| 2GHz BAND SECTOR IDENTIFIER | 1.7GHz BAND SECTOR IDENTIFIER | ... |
|---|---|---|
| 31405272 | 51048829 | ... |

*Fig.16*

| SECTOR IDENTIFIER | SECTOR FREQUENCY TYPE | SECTOR CENTER LATITUDE | SECTOR CENTER LONGITUDE | BASE STATION NAME | BASE STATION LATITUDE | BASE STATION LONGITUDE | ... |
|---|---|---|---|---|---|---|---|
| 31405272 | 2GHz BAND | XXX.XXX | YYY.YYY | CV YOKOSUKA | xxx.xxx | yyy.yyy | ... |

**Fig.17**

| 2GHz BAND SECTOR IDENTIFIER | 1.7GHz BAND SECTOR IDENTIFIER | 2GHz BAND SECTOR CENTER LATITUDE | 2GHz BAND SECTOR CENTER LONGITUDE | ... |
|---|---|---|---|---|
| 31405272 | 51048829 | XXX.XXX | YYY.YYY | ... |

**Fig.18**

EP 2 469 464 A1

| 2GHz BAND SECTOR IDENTIFIER | 1.7GHz BAND SECTOR IDENTIFIER | AREA | POLYGON DATA |
|---|---|---|---|
| 31405272 | 51048829 | 32.5214 | (BINARY DATA) |

*Fig.19*

| 800MHz BAND SECTOR IDENTIFIER | AREA | POLYGON DATA |
|---|---|---|
| 41405272 | 43.1520 | (BINARY DATA) |

## Fig.20

| NEW PARTITIONED REGION IDENTIFIER | 20GHz BAND SECTOR IDENTIFIER | 1.7GHz BAND SECTOR IDENTIFIER | AREA RATIO OF 20GHz BAND/1.7GHz BAND VORONOI REGION TO NEW PARTITIONED REGION | 800MHz BAND SECTOR IDENTIFIER | AREA RATIO OF 800MHz BAND VORONOI REGION TO NEW PARTITIONED REGION | AREA OF NEW PARTITIONED REGION | POLYGON DATA |
|---|---|---|---|---|---|---|---|
| A | 31405272 | 51048829 | 0.4521 | 41405272 | 0.3579 | 89.295 | (BINARY DATA INDICATING REGION A) |

Fig.21

(a) VORONOI REGION CREATED FROM 1.7GHz BAND/2GHz BAND SECTOR

(b) VORONOI REGION CREATED FROM 800MHz BAND SECTOR

# Fig.22

# Fig.23

```
                    ┌─────────┐
                    │  START  │
                    └─────────┘
                         │
┌────────────────────────────────────────────┐
│   EXTRACT RECORD INFORMATION OF 800MHz BAND │
│   SECTOR FROM SECTOR INFORMATION MANAGEMENT │── S101
│ TABLE OF SECTOR INFORMATION ACCUMULATION UNIT│
└────────────────────────────────────────────┘
                         │
┌────────────────────────────────────────────┐
│  CREATE 800MHz BAND VORONOI REGION MANAGEMENT│
│     TABLE BASED ON EXTRACTED 800MHz BAND     │── S102
│          SECTOR CENTER COORDINATES           │
└────────────────────────────────────────────┘
                         │
┌────────────────────────────────────────────┐
│  EXTRACT RECORD INFORMATION OF 2GHz BAND/1.7GHz│
│ BAND SECTOR FROM SECTOR INFORMATION MANAGEMENT │── S103
│ TABLE OF SECTOR INFORMATION ACCUMULATION UNIT  │
└────────────────────────────────────────────┘
                         │
┌────────────────────────────────────────────┐
│  ACQUIRE OVERLAY INFORMATION MANAGEMENT TABLE │
│   FROM OVERLAY INFORMATION ACCUMULATION UNIT  │── S104
└────────────────────────────────────────────┘
                         │
┌────────────────────────────────────────────┐
│  CREATE INTERMEDIATE PROCESSING TABLE BASED   │
│    ON OVERLAY INFORMATION MANAGEMENT TABLE    │── S105
└────────────────────────────────────────────┘
                         │
┌────────────────────────────────────────────┐
│   CREATE 2GHz BAND/1.7GHz BAND VORONOI REGION │
│     MANAGEMENT TABLE BASED ON 2GHz BAND SECTOR│── S106
│ CENTER COORDINATES OF INTERMEDIATE PROCESSING TABLE│
└────────────────────────────────────────────┘
                         │
┌────────────────────────────────────────────┐
│      CREATE NEW PARTITIONED REGION MANAGEMENT │
│ TABLE BY SUPERIMPOSITION OF 2GHz BAND/1.7GHz BAND│── S107
│  VORONOI REGION AND 800MHz BAND VORONOI REGION│
└────────────────────────────────────────────┘
                         │
┌────────────────────────────────────────────┐
│ STORE NEW PARTITIONED REGION MANAGEMENT TABLE │
│  INTO POPULATION DISTRIBUTION REGION SAVING UNIT│── S108
└────────────────────────────────────────────┘
                         │
                    ┌─────────┐
                    │   END   │
                    └─────────┘
```

# Fig.24

EP 2 469 464 A1

| SECTOR IDENTIFIER | ESTIMATED POPULATION | ESTIMATED NUMBER OF FEMALES | ESTIMATED NUMBER OF MALES | MALE IN 20s | FEMALE IN 20s | ... |
|---|---|---|---|---|---|---|
| 31405272 | 614 | 320 | 294 | 32 | 50 | ... |

# Fig.25

EP 2 469 464 A1

| IDENTIFIER OF NEW PARTITIONED REGION | ESTIMATED POPULATION | ... | AREA OF NEW PARTITIONED REGION | POLYGON DATA |
|---|---|---|---|---|
| A | 1024,568 | ... | 124.720 | (BINARY) |

*Fig.26*

# Fig.27

| MESH ID | POLYGON DATA |
|---------|--------------|
| 000001  | BINARY       |

*Fig.28*

| MESH ID | ESTIMATED POPULATION IN MESH | POLYGON DATA |
|---------|------------------------------|--------------|
| 000001  | 582                          | (BINARY)     |

# Fig.29

START

EXTRACT NEW PARTITIONED REGION MANAGEMENT TABLE FROM POPULATION DISTRIBUTION REGION SAVING UNIT — S201

EXTRACT POPULATION INFORMATION MANAGEMENT TABLE FROM SECTOR POPULATION INFORMATION ACCUMULATION UNIT — S202

COMBINE NEW PARTITIONED REGION MANAGEMENT TABLE AND POPULATION INFORMATION MANAGEMENT TABLE USING SECTOR IDENTIFIER AS KEY — S203

CALCULATE POPULATION OF NEW PARTITIONED REGION — S204

PARTITION NEW PARTITIONED REGION USING MESH REGION — S205

CALCULATE AREA OF PART OF NEW PARTITIONED REGION INCLUDED IN MESH REGION — S206

CALCULATE POPULATION OF EACH MESH REGION — S207

STORE POPULATION OF EACH MESH REGION INTO POPULATION DISTRIBUTION MESH SAVING UNIT — S208

END

**Fig.30**

EP 2 469 464 A1

# Fig.31

| USER IDENTIFIER | TIME | LOCATION DATA TYPE | SAI (OR SECTOR IDENTIFIER) | LATITUDE | LONGITUDE |
|---|---|---|---|---|---|
| 123457192 | 2010/03/01 00:00:00 | DETAILED LOCATION | — | YYY | XXX |
| 123457193 | 2010/03/01 00:00:00 | DETAILED LOCATION | — | YYY | XXX |
| 123457194 | 2010/03/01 00:00:00 | DETAILED LOCATION | — | YYY | XXX |

# Fig.32

| USER IDENTIFIER | TIME | LOCATION DATA TYPE | SAI (OR SECTOR IDENTIFIER) | LATITUDE | LONGITUDE |
|---|---|---|---|---|---|
| 123456789 | 2010/03/01 00:00:00 | ROUGH LOCATION | A | YYY | XXX |
| 123456790 | 2010/03/01 00:00:00 | ROUGH LOCATION | A | YYY | XXX |
| 123456791 | 2010/03/01 00:00:00 | ROUGH LOCATION | B | YYY | XXX |
| 123456792 | 2010/03/01 00:00:00 | ROUGH LOCATION | C | YYY | XXX |

# Fig.33

| USER IDENTIFIER | TIME | LOCATION DATA TYPE | SAI (OR SECTOR IDENTIFIER) | LATITUDE | LONGITUDE |
|---|---|---|---|---|---|
| 123456789 | 2010/03/01 00:00:00 | ROUGH LOCATION | A | YYY | XXX |
| 123456790 | 2010/03/01 00:00:00 | ROUGH LOCATION | A | YYY | XXX |
| 123456791 | 2010/03/01 00:00:00 | ROUGH LOCATION | B | YYY | XXX |
| 123456792 | 2010/03/01 00:00:00 | ROUGH LOCATION | C | YYY | XXX |
| 123457192 | 2010/03/01 00:00:00 | DETAILED LOCATION | — | YYY | XXX |
| 123457193 | 2010/03/01 00:00:00 | DETAILED LOCATION | — | YYY | XXX |
| 123457194 | 2010/03/01 00:00:00 | DETAILED LOCATION | — | YYY | XXX |

Fig.34

| USER IDENTIFIER | GENDER | AGE | ADDRESS CODE | TIME | LOCATION DATA TYPE | SAI (OR SECTOR IDENTIFIER) | LATITUDE | LONGITUDE |
|---|---|---|---|---|---|---|---|---|
| 123456789 | MALE | 20 | 49875412265448 | 2010/03/01 00:00:00 | ROUGH LOCATION | A | YYY | XXX |
| 123456790 | MALE | 21 | 49875412265428 | 2010/03/01 00:00:00 | ROUGH LOCATION | A | YYY | XXX |
| 123456791 | FEMALE | 32 | 49875412265428 | 2010/03/01 00:00:00 | ROUGH LOCATION | B | YYY | XXX |
| 123456792 | FEMALE | 35 | 49875412265418 | 2010/03/01 00:00:00 | ROUGH LOCATION | C | YYY | XXX |
| 123457192 | MALE | 39 | 49875412265428 | 2010/03/01 00:00:00 | DETAILED LOCATION | — | YYY | XXX |
| 123457193 | FEMALE | 20 | 49875412265428 | 2010/03/01 00:00:00 | DETAILED LOCATION | — | YYY | XXX |
| 123457194 | FEMALE | 19 | 49875412265418 | 2010/03/01 00:00:00 | DETAILED LOCATION | — | YYY | XXX |

# Fig.35

| SAI (OR SECTOR IDENTIFIER) | IDENTIFIER OF AGGREGATION REGION | AREA RATIO (AREA OF OVERLAP REGION/ AREA OF SECTOR) | FREQUENCY BAND |
|---|---|---|---|
| A | a | 0.1 | 2GHz |
| A | b | 0.1 | 2GHz |
| A | c | 0.05 | 2GHz |
| A | e | 0.2 | 2GHz |
| A | f | 0.3 | 2GHz |
| A | g | 0.1 | 2GHz |
| A | j | 0.05 | 2GHz |
| A | k | 0.1 | 2GHz |
| B | a | 0.1 | 800MHz |
| B | b | 0.1 | 800MHz |
| B | c | 0.05 | 800MHz |
| B | e | 0.2 | 800MHz |
| B | f | 0.3 | 800MHz |
| B | g | 0.1 | 800MHz |
| B | j | 0.05 | 800MHz |
| B | k | 0.1 | 800MHz |
| C | d | 0.05 | 2GHz |
| C | g | 0.2 | 2GHz |
| C | h | 0.3 | 2GHz |
| C | i | 0.1 | 2GHz |
| C | l | 0.15 | 2GHz |
| C | m | 0.15 | 2GHz |
| C | n | 0.05 | 2GHz |

## Fig.36

| USER IDENTIFIER | GENDER | AGE | ADDRESS CODE | TIME | LOCATION DATA TYPE | SAI (OR SECTOR IDENTIFIER) | LATITUDE | LONGITUDE | EXPANSION FACTOR |
|---|---|---|---|---|---|---|---|---|---|
| 123456789 | MALE | 20 | 49875412265448 | 2010/03/01 00:00:00 | ROUGH LOCATION | A | YYY | XXX | 2.1828 |
| 123456790 | MALE | 21 | 49875412265428 | 2010/03/01 00:00:00 | ROUGH LOCATION | A | YYY | XXX | 3.1928 |
| 123456791 | FEMALE | 32 | 49875412265428 | 2010/03/01 00:00:00 | ROUGH LOCATION | B | YYY | XXX | 1.7828 |
| 123456792 | FEMALE | 35 | 49875412265418 | 2010/03/01 00:00:00 | ROUGH LOCATION | C | YYY | XXX | 2.2291 |
| 123457192 | MALE | 39 | 49875412265428 | 2010/03/01 00:00:00 | DETAILED LOCATION | — | YYY | XXX | 3.2917 |
| 123457193 | FEMALE | 20 | 49875412265428 | 2010/03/01 00:00:00 | DETAILED LOCATION | — | YYY | XXX | 1.4933 |
| 123457194 | FEMALE | 19 | 49875412265418 | 2010/03/01 00:00:00 | DETAILED LOCATION | — | YYY | XXX | 1.2917 |

EP 2 469 464 A1

## Fig.37

| USER IDENTIFIER | GENDER | AGE | ADDRESS CODE | TIME | LOCATION DATA TYPE | SAI(OR SECTOR IDENTIFIER) | IDENTIFIER OF AGGREGATION REGION | AREA RATIO | EXPANSION FACTOR |
|---|---|---|---|---|---|---|---|---|---|
| 123456789 | MALE | 20 | 49875412265448 | 2010/03/01 00:00:00 | ROUGH LOCATION | A | a | 0.1 | 2.1828 |
| 123456789 | MALE | 20 | 49875412265448 | 2010/03/01 00:00:00 | ROUGH LOCATION | A | b | 0.1 | 2.1828 |
| 123456789 | MALE | 20 | 49875412265448 | 2010/03/01 00:00:00 | ROUGH LOCATION | A | c | 0.05 | 2.1828 |
| 123456789 | MALE | 20 | 4987541226448 | 2010/03/01 00:00:00 | ROUGH LOCATION | A | e | 0.2 | 2.1828 |
| 123456789 | MALE | 20 | 4987541226448 | 2010/03/01 00:00:00 | ROUGH LOCATION | A | f | 0.3 | 2.1828 |
| 123456789 | MALE | 20 | 4987541226448 | 2010/03/01 00:00:00 | ROUGH LOCATION | A | g | 0.1 | 2.1828 |
| 123456789 | MALE | 20 | 4987541226448 | 2010/03/01 00:00:00 | ROUGH LOCATION | A | j | 0.05 | 2.1828 |
| 123456789 | MALE | 20 | 4987541226448 | 2010/03/01 00:00:00 | ROUGH LOCATION | A | k | 0.1 | 2.1828 |
| 123456790 | MALE | 21 | 4987541226428 | 2010/03/01 00:00:00 | ROUGH LOCATION | A | a | 0.1 | 3.1928 |
| 123456790 | MALE | 21 | 4987541226428 | 2010/03/01 00:00:00 | ROUGH LOCATION | A | b | 0.1 | 3.1928 |
| 123456790 | MALE | 21 | 4987541226428 | 2010/03/01 00:00:00 | ROUGH LOCATION | A | c | 0.05 | 3.1928 |
| 123456790 | MALE | 21 | 4987541226428 | 2010/03/01 00:00:00 | ROUGH LOCATION | A | e | 0.2 | 3.1928 |
| 123456790 | MALE | 21 | 4987541226428 | 2010/03/01 00:00:00 | ROUGH LOCATION | A | f | 0.3 | 3.1928 |
| 123456790 | MALE | 21 | 4987541226428 | 2010/03/01 00:00:00 | ROUGH LOCATION | A | g | 0.1 | 3.1928 |
| 123456790 | MALE | 21 | 4987541226428 | 2010/03/01 00:00:00 | ROUGH LOCATION | A | j | 0.05 | 3.1928 |
| 123456790 | MALE | 21 | 4987541226428 | 2010/03/01 00:00:00 | ROUGH LOCATION | A | k | 0.1 | 3.1928 |
| 123456791 | FEMALE | 32 | 4987541226428 | 2010/03/01 00:00:00 | ROUGH LOCATION | B | a | 0.1 | 1.7828 |
| 123456791 | FEMALE | 32 | 4987541226428 | 2010/03/01 00:00:00 | ROUGH LOCATION | B | b | 0.1 | 1.7828 |
| 123456791 | FEMALE | 32 | 4987541226428 | 2010/03/01 00:00:00 | ROUGH LOCATION | B | c | 0.05 | 1.7828 |
| 123456791 | FEMALE | 32 | 4987541226428 | 2010/03/01 00:00:00 | ROUGH LOCATION | B | e | 0.2 | 1.7828 |
| 123456791 | FEMALE | 32 | 4987541226428 | 2010/03/01 00:00:00 | ROUGH LOCATION | B | f | 0.3 | 1.7828 |
| 123456791 | FEMALE | 32 | 4987541226428 | 2010/03/01 00:00:00 | ROUGH LOCATION | B | g | 0.1 | 1.7828 |
| 123456791 | FEMALE | 32 | 4987541226428 | 2010/03/01 00:00:00 | ROUGH LOCATION | B | j | 0.05 | 1.7828 |
| 123456791 | FEMALE | 32 | 4987541226428 | 2010/03/01 00:00:00 | ROUGH LOCATION | B | k | 0.1 | 1.7828 |
| 123456792 | FEMALE | 35 | 4987541226418 | 2010/03/01 00:00:00 | ROUGH LOCATION | C | d | 0.05 | 2.2291 |
| 123456792 | FEMALE | 35 | 4987541226418 | 2010/03/01 00:00:00 | ROUGH LOCATION | C | g | 0.2 | 2.2291 |
| 123456792 | FEMALE | 35 | 4987541226418 | 2010/03/01 00:00:00 | ROUGH LOCATION | C | h | 0.3 | 2.2291 |
| 123456792 | FEMALE | 35 | 4987541226418 | 2010/03/01 00:00:00 | ROUGH LOCATION | C | i | 0.1 | 2.2291 |
| 123456792 | FEMALE | 35 | 4987541226418 | 2010/03/01 00:00:00 | ROUGH LOCATION | C | l | 0.15 | 2.2291 |
| 123456792 | FEMALE | 35 | 4987541226418 | 2010/03/01 00:00:00 | ROUGH LOCATION | C | m | 0.15 | 2.2291 |
| 123456792 | FEMALE | 35 | 4987541226418 | 2010/03/01 00:00:00 | ROUGH LOCATION | C | n | 0.05 | 2.2291 |

EP 2 469 464 A1

# Fig.38

| USER IDENTIFIER | GENDER | AGE | ADDRESS CODE | TIME | LOCATION DATA TYPE | SAI(OR SECTOR IDENTIFIER) | IDENTIFIER OF AGGREGATION REGION | AREA RATIO | EXPANSION FACTOR |
|---|---|---|---|---|---|---|---|---|---|
| 123457192 | MALE | 39 | 49875412265428 | 2010/03/01 00:00:00 | DETAILED LOCATION | — | a | 1 | 3.2917 |
| 123457193 | FEMALE | 20 | 49875412265428 | 2010/03/01 00:00:00 | DETAILED LOCATION | — | b | 1 | 1.4933 |
| 123457194 | FEMALE | 19 | 49875412265418 | 2010/03/01 00:00:00 | DETAILED LOCATION | — | c | 1 | 1.2917 |

**Fig.39**

| IDENTIFIER OF AGGREGATION REGION | TIME | POPULATION CONTRIBUTION RATE TO AGGREGATION REGION | GENDER | AGE | ADDRESS CODE | USER IDENTIFIER | LOCATION DATA TYPE |
|---|---|---|---|---|---|---|---|
| a | 2010/03/01 00:00:00 | 0.21828 | MALE | 20 | 49875412265448 | 123456789 | ROUGH LOCATION |
| b | 2010/03/01 00:00:00 | 0.21828 | MALE | 20 | 49875412265448 | 123456789 | ROUGH LOCATION |
| c | 2010/03/01 00:00:00 | 0.10914 | MALE | 20 | 49875412265448 | 123456789 | ROUGH LOCATION |
| e | 2010/03/01 00:00:00 | 0.43656 | MALE | 20 | 49875412265448 | 123456789 | ROUGH LOCATION |
| f | 2010/03/01 00:00:00 | 0.65484 | MALE | 20 | 49875412265448 | 123456789 | ROUGH LOCATION |
| g | 2010/03/01 00:00:00 | 0.21828 | MALE | 20 | 49875412265448 | 123456789 | ROUGH LOCATION |
| j | 2010/03/01 00:00:00 | 0.10914 | MALE | 20 | 49875412265448 | 123456789 | ROUGH LOCATION |
| k | 2010/03/01 00:00:00 | 0.21828 | MALE | 20 | 49875412265448 | 123456789 | ROUGH LOCATION |
| a | 2010/03/01 00:00:00 | 0.31928 | MALE | 21 | 49875412265428 | 123456790 | ROUGH LOCATION |
| b | 2010/03/01 00:00:00 | 0.31928 | MALE | 21 | 49875412265428 | 123456790 | ROUGH LOCATION |
| c | 2010/03/01 00:00:00 | 0.15964 | MALE | 21 | 49875412265428 | 123456790 | ROUGH LOCATION |
| e | 2010/03/01 00:00:00 | 0.63856 | MALE | 21 | 49875412265428 | 123456790 | ROUGH LOCATION |
| f | 2010/03/01 00:00:00 | 0.95784 | MALE | 21 | 49875412265428 | 123456790 | ROUGH LOCATION |
| g | 2010/03/01 00:00:00 | 0.31928 | MALE | 21 | 49875412265428 | 123456790 | ROUGH LOCATION |
| j | 2010/03/01 00:00:00 | 0.15964 | MALE | 21 | 49875412265428 | 123456790 | ROUGH LOCATION |
| k | 2010/03/01 00:00:00 | 0.31928 | MALE | 21 | 49875412265428 | 123456790 | ROUGH LOCATION |
| a | 2010/03/01 00:00:00 | 0.17828 | FEMALE | 32 | 49875412265428 | 123456791 | ROUGH LOCATION |
| b | 2010/03/01 00:00:00 | 0.17828 | FEMALE | 32 | 49875412265428 | 123456791 | ROUGH LOCATION |
| c | 2010/03/01 00:00:00 | 0.08914 | FEMALE | 32 | 49875412265428 | 123456791 | ROUGH LOCATION |
| e | 2010/03/01 00:00:00 | 0.35656 | FEMALE | 32 | 49875412265428 | 123456791 | ROUGH LOCATION |
| f | 2010/03/01 00:00:00 | 0.53484 | FEMALE | 32 | 49875412265428 | 123456791 | ROUGH LOCATION |
| g | 2010/03/01 00:00:00 | 0.17828 | FEMALE | 32 | 49875412265428 | 123456791 | ROUGH LOCATION |
| j | 2010/03/01 00:00:00 | 0.08914 | FEMALE | 32 | 49875412265428 | 123456791 | ROUGH LOCATION |
| k | 2010/03/01 00:00:00 | 0.17828 | FEMALE | 32 | 49875412265428 | 123456791 | ROUGH LOCATION |
| d | 2010/03/01 00:00:00 | 0.11146 | FEMALE | 35 | 49875412265418 | 123456792 | ROUGH LOCATION |
| g | 2010/03/01 00:00:00 | 0.44582 | FEMALE | 35 | 49875412265418 | 123456792 | ROUGH LOCATION |
| h | 2010/03/01 00:00:00 | 0.66873 | FEMALE | 35 | 49875412265418 | 123456792 | ROUGH LOCATION |
| i | 2010/03/01 00:00:00 | 0.22291 | FEMALE | 35 | 49875412265418 | 123456792 | ROUGH LOCATION |
| l | 2010/03/01 00:00:00 | 0.33437 | FEMALE | 35 | 49875412265418 | 123456792 | ROUGH LOCATION |
| m | 2010/03/01 00:00:00 | 0.33437 | FEMALE | 35 | 49875412265418 | 123456792 | ROUGH LOCATION |
| n | 2010/03/01 00:00:00 | 0.11146 | FEMALE | 35 | 49875412265418 | 123456792 | ROUGH LOCATION |
| a | 2010/03/01 00:00:00 | 3.2917 | MALE | 39 | 49875412265428 | 123457192 | DETAILED LOCATION |
| b | 2010/03/01 00:00:00 | 1.4933 | FEMALE | 20 | 49875412265428 | 123457193 | DETAILED LOCATION |
| c | 2010/03/01 00:00:00 | 1.2917 | FEMALE | 19 | 49875412265418 | 123457194 | DETAILED LOCATION |

## Fig.40

```
                    ( START )
                        │
┌──────────────────────────────────────────────────┐
│ POPULATION DISTRIBUTION REGION CREATION UNIT       │
│ EXTRACTS RECORD INFORMATION OF 800MHz BAND SECTOR  │──S501
│ FROM SECTOR INFORMATION MANAGEMENT TABLE OF        │
│ SECTOR INFORMATION ACCUMULATION UNIT               │
└──────────────────────────────────────────────────┘
                        │
┌──────────────────────────────────────────────────┐
│ POPULATION DISTRIBUTION REGION                     │
│ CREATION UNIT ESTIMATES SECTOR AREA                │──S502
│ OF INFLUENCE OF EXTRACTED 800MHz BAND              │
└──────────────────────────────────────────────────┘
                        │
┌──────────────────────────────────────────────────┐
│ POPULATION DISTRIBUTION REGION CREATION UNIT       │
│ EXTRACTS RECORD INFORMATION OF 2GHz BAND SECTOR    │──S503
│ FROM SECTOR INFORMATION MANAGEMENT TABLE OF        │
│ SECTOR INFORMATION ACCUMULATION UNIT               │
└──────────────────────────────────────────────────┘
                        │
┌──────────────────────────────────────────────────┐
│ POPULATION DISTRIBUTION REGION CREATION UNIT       │
│ ACQUIRES OVERLAY INFORMATION MANAGEMENT TABLE      │──S504
│ FROM SECTOR-TO-SECTOR OVERLAY INFORMATION          │
│ ACCUMULATION UNIT                                  │
└──────────────────────────────────────────────────┘
                        │
┌──────────────────────────────────────────────────┐
│ POPULATION DISTRIBUTION REGION                     │
│ CREATION UNIT ESTIMATES SECTOR AREA                │──S505
│ OF INFLUENCE OF 2GHz BAND/1.7GHz BAND              │
└──────────────────────────────────────────────────┘
                        │
┌──────────────────────────────────────────────────┐
│ POPULATION DISTRIBUTION MESH CREATION UNIT         │
│ EXTRACTS AGGREGATION REGION DATA (e.g. MESH REGION)│──S506
│ FROM AGGREGATION REGION DATA SAVING UNIT AND       │
│ CALCULATES AREA RATIO TO SECTOR AREA OF INFLUENCE  │
└──────────────────────────────────────────────────┘
                        │
┌──────────────────────────────────────────────────┐
│ POPULATION DISTRIBUTION MESH CREATION              │
│ UNIT STORES CALCULATED AREA RATIO                  │──S507
└──────────────────────────────────────────────────┘
                        │
                    (  END  )
```

# Fig.41

START

SUBSCRIBER LOCATION INFORMATION STORAGE UNIT
STORES ACQUIRED SUBSCRIBER LOCATION INFORMATION — S601
(DETAILED LOCATION DATA AND ROUGH LOCATION DATA)

SUBSCRIBER LOCATION INFORMATION SELECTION UNIT
EXTRACTS SUBSCRIBER LOCATION INFORMATION SATISFYING — S602
CONDITIONS SUCH AS SPECIFIC DATE OR PERIOD OF TIME
FROM SUBSCRIBER LOCATION INFORMATION STORAGE UNIT

SUBSCRIBER ATTRIBUTE INFORMATION COMBINING UNIT
COMBINES SUBSCRIBER ATTRIBUTE INFORMATION OF
SUBSCRIBER ATTRIBUTE STORAGE UNIT AND — S603
SUBSCRIBER LOCATIONINFORMATION EXTRACTED BY
SUBSCRIBER LOCATION INFORMATION SELECTION UNIT

ATTRIBUTE SUBSCRIBER DISTRIBUTION
STORAGE UNIT STORES OUTPUT RESULT — S604

EXPANSION FACTOR CALCULATION UNIT COMBINES
DISTRIBUTION INFORMATION STORED IN ATTRIBUTE
SUBSCRIBER DISTRIBUTION STORAGE UNIT AND OTHER
STATISTICAL DATA (CENSUS etc.), CALCULATES — S605
EXPANSION FACTOR FOR CONVERTING NUMBER OF
MOBILE EQUIPMENTS TO POPULATION, AND ASSIGNS
EXPANSION FACTOR TO EACH USER

BASIC DATA CREATION UNIT COMBINES MANAGEMENT
INFORMATION STORED IN POPULATION DISTRIBUTION
MESH CREATION UNIT AND MANAGEMENT INFORMATION — S606
STORED IN EXPANSION FACTOR CALCULATION UNIT

BASIC DATA SAVING UNIT
STORES BASIC DATA GENERATED — S607
BY BASIC DATA CREATION UNIT

SEARCH UNIT PERFORMS INFORMATION
EXTRACTION AND INFORMATION CONVERSION — S608
UNDER GIVEN CONDITIONS IN BASIC TABLE

SEARCH RESULT SAVING UNIT STORES
INFORMATION EXTRACTION AND CONVERSION — S609
RESULTS UNDER GIVEN CONDITIONS IN SEARCH UNIT

END

# Fig.42

## INTERNATIONAL SEARCH REPORT

| International application No. |
| --- |
| PCT/JP2010/063833 |

A. CLASSIFICATION OF SUBJECT MATTER
*G06Q50/00*(2006.01)i, *H04W16/24*(2009.01)i

According to International Patent Classification (IPC) or to both national classification and IPC

B. FIELDS SEARCHED

Minimum documentation searched (classification system followed by classification symbols)
G06Q50/00, H04W16/24

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2003-030373 A (Fujitsu Ltd.), 31 January 2003 (31.01.2003), paragraphs [0011] to [0145] & US 2003/0014213 A1 | 1-3,8-21 |
| Y | JP 2003-067553 A (Victor Company of Japan, Ltd.), 07 March 2003 (07.03.2003), paragraph [0025] (Family: none) | 1-3,8-21 |
| A | JP 2009-031461 A (Toshiba Corp.), 12 February 2009 (12.02.2009), paragraph [0016] (Family: none) | 4-7 |

☒ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 06 September, 2010 (06.09.10) | Date of mailing of the international search report 14 September, 2010 (14.09.10) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/063833 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2006-085602 A  (Gosei Co., Ltd.),<br>30 March 2006 (30.03.2006),<br>paragraph [0016]<br>(Family: none) | 4-7 |

Form PCT/ISA/210 (continuation of second sheet) (July 2009)

**EP 2 469 464 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005252548 A